(19) **Europäisches Patentamt European Patent Office Office européen des brevets**

(11) **EP 4 510 671 A1**

(12) **EUROPEAN PATENT APPLICATION**
published in accordance with Art. 153(4) EPC

(43) Date of publication:
**19.02.2025 Bulletin 2025/08**

(51) International Patent Classification (IPC):
**H04W 16/18** (2009.01)

(21) Application number: **22936917.8**

(86) International application number:
**PCT/CN2022/086922**

(22) Date of filing: **14.04.2022**

(87) International publication number:
**WO 2023/197269 (19.10.2023 Gazette 2023/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **ZHAO, Qun**
**Beijing 100085 (CN)**

(74) Representative: **Dehns Germany Partnerschaft mbB**
**Theresienstraße 6-8**
**80333 München (DE)**

(54) **METHOD AND APPARATUS FOR RECEIVING SIGNALS AND FOR SENDING SIGNALS, AND STORAGE MEDIUM**

(57) The present disclosure provides a method and apparatus for receiving signals and for sending signals, and a storage medium. The method for receiving signals comprises: determining a first initial resource element (RE) corresponding to a first demodulation reference signal (DMRS) of a downlink control channel (PDCCH) of a first system; determining a second initial RE corresponding to a reference signal of a second system; on the basis of the first initial RE, using a shift mode to determine candidate REs corresponding to the first DMRS; wherein the resources corresponding to the first initial RE and the second initial RE are identical; detecting and receiving the first DMRS on an available RE of the candidate REs; wherein the available RE is not occupied by other reference signals, and the other reference signals are second DMRSs or reference signals of the second system. The present disclosure allows for effectively avoiding interference from a reference signal of an LTE system with regard to a DMRS of an NR PDCCH, while increasing the system capacity of the NR PDCCH and improving the performance of the NR system.

```
┌─────────────────────────────────────┐
│ Determine first initial Resource     │
│ Elements (REs) corresponding to a    │──── 801
│ first Demodulation Reference Signal  │
│ (DMRS) of a Physical Downlink Control│
│ Channel (PDCCH) of a first system    │
└─────────────────────────────────────┘
                  │
                  ▼
┌─────────────────────────────────────┐
│ Determine second initial REs         │──── 802
│ corresponding to a reference signal  │
│ of a second system                   │
└─────────────────────────────────────┘
                  │
                  ▼
┌─────────────────────────────────────┐
│ Based on the first initial REs,      │──── 803
│ determine candidate REs corresponding│
│ to the first DMRS by shift           │
└─────────────────────────────────────┘
                  │
                  ▼
┌─────────────────────────────────────┐
│ On available REs of the candidate    │──── 804
│ REs, detect and receive the first    │
│ DMRS                                 │
└─────────────────────────────────────┘
```

FIG. 8

EP 4 510 671 A1

**Description**

**TECHNICAL FIELD**

The present disclosure relates to the communication field and in particular to methods and apparatuses for receiving signals and for sending signals, and storage medium.

**BACKGROUND**

When a Long Term Evolution (LTE) system and a New Radio (NR) system coexist in a same frequency band, an LTE reference signal may cause severe interference to the NR system and thus NR Physical Downlink Control Channel (PDCCH) has a decreased performance and a severely-limited capacity, limiting the performance and scheduling flexibility of the NR system.

**SUMMARY**

In order to overcome the problems in the related arts, one or more embodiments of the present disclosure provide methods and apparatuses for receiving signals and for sending signals, and storage mediums. In Dynamic Spectrum Sharing (DSS) scenarios, the channel estimation performance of the NR system can be effectively improved, improving the transmission performance of the NR PDCCH.

According to a first aspect of embodiments of the present disclosure, there is provided a method for receiving signals. The method for receiving signals is performed by a terminal and includes:

determining first initial Resource Elements (REs) corresponding to a first Demodulation Reference Signal (DMRS) of a Physical Downlink Control Channel (PDCCH) of a first system;
determining second initial REs corresponding to a reference signal of a second system;
determining candidate REs corresponding to the first DMRS by shift based on the first initial REs; wherein resources corresponding to the first initial REs and the second initial REs are same; and detecting and receiving the first DMRS on available REs of the candidate REs; wherein the available REs are unoccupied by another reference signal, and the another reference signal is a second DMRS or the reference signal of the second system.

In an example, determining the candidate REs corresponding to the first DMRS by shift based on the first initial REs includes:

determining a first shift range by shift based on the first initial REs;
determining REs within the first shift range as the candidate REs.

In an example, determining the first shift range by shift based on the first initial REs, includes:

performing sequential shift in a first direction in frequency domain based on the first initial REs; and
satisfying a first shift stop condition, then determining, as the first shift range, a frequency domain range obtained by performing shift in the first direction.

In an example, determining the first shift range based on the first initial REs includes:

performing sequential shift in the first direction in frequency domain based on the first initial REs;
satisfying the first shift stop condition, then performing sequential shift in a second direction in frequency domain based on the first initial REs; and
satisfying the first shift stop condition again, then determining, as the first shift range, a frequency domain range obtained by performing the shift in the first direction and the second direction.

In an example, determining the first shift range based on the first initial REs includes:

performing sequential shift in the first direction in frequency domain based on the first initial REs;
satisfying the first shift stop condition, then performing sequential shift in the second direction in frequency domain based on the first initial REs;
satisfying the first shift stop condition again, then shifting one time unit in a third direction in time domain based on the first initial REs;

continuing shift based on the shift sequence of the first direction, the second direction and the third direction; and satisfying a second shift stop condition in case of performing the shift in the third direction, then determining, as the first shift range the frequency domain ranges obtained by performing the shift in the first direction and the second direction and a time domain range obtained by performing the shift in the third direction.

In an example, the first direction is any one of:

a frequency-increasing direction, or
a frequency-decreasing direction.

In an example, the first direction is a frequency-increasing direction and the second direction is a frequency-decreasing direction; or,
the first direction is the frequency-decreasing direction and the second direction is the frequency-increasing direction.
In an example, the third direction is a time unit-increasing direction.
In an example, the first shift stop condition includes that a number of frequency domain resources corresponding to the shift is equal to a predetermined maximum frequency unit number;
the second shift stop condition includes that a number of time units corresponding to the shift is equal to a predetermined maximum number of time units.
In an example, the maximum number of frequency units is equal to 3.
In an example, the maximum number of time units is equal to a number of time units occupied by a Control Resource Set (CORESET) where the first DMRS is located.
In an example, the maximum number of frequency units may be determined by any one of the followings:
based on protocol predefinition; based on instruction of a signaling sent by base station; or based on terminal reporting capability.
In an example, the maximum number of time units may be determined by any one of the followings:
based on protocol predefinition; based on instruction of a signaling sent by base station; or based on terminal reporting capability.
In an example, detecting and receiving the first DMRS on the available REs of the candidate REs includes:
detecting and receiving the first DMRS on the available REs determined in a fourth direction; wherein the fourth direction is a shift direction which is determine from the first direction and the second direction and in which there is a maximum number of the available REs.
In an example, the method further includes:
determining that no available RE is in the candidate Res, then not receiving the first DMRS.
According to a second aspect of embodiments of the present disclosure, there is provided a method for receiving signals. The method is performed by a terminal and includes:

determining first initial Resource Elements (REs) where a first Demodulation Reference Signal (DMRS) of a Physical Downlink Control Channel (PDCCH) of a first system is located;
determining second initial REs where a reference signal of a second system is located;
determining available REs; wherein resources corresponding to the first initial REs and the second initial REs are same, the available REs are unoccupied by another reference signal within a first frequency domain range corresponding to the PDCCH, and the another reference signal includes a second DMRS or the reference signal of the second system; and
detecting and receiving the first DMRS on the available REs.

In an example, determining the available REs includes:

determining a first proportion of the second initial REs within the first frequency domain range;
determining an available-RE index set based on the first proportion; wherein there is a preset correspondence between the first proportion and the available-RE index set;
removing the second initial REs within the first frequency domain range to obtain a candidate-RE set; and
determining the available REs in the candidate-RE set based on the available-RE index set.

In an example, determining the first proportion of the second initial REs within the first frequency domain range includes:
determining a ratio of a number of the second initial REs within the first frequency domain range to a total number of REs within the first frequency domain range to obtain the first proportion.
In an example, determining the available REs in the candidate-RE set based on the available-RE index set includes:

re-numbering each RE in the candidate-RE set in an ascending order based on a corresponding index, and determining an index value of each RE in the candidate-RE set; and
determining REs indicated by the available-RE index set in the candidate-RE set as the available REs.

In an example, the first frequency domain range is any one of:

Bandwdith part (BWP) frequency domain range where the PDCCH is located;
one Resource Block (RB) range within a frequency domain range where the PDCCH is located; or
a CORESET frequency domain range corresponding to the PDCCH.

According to a third aspect of embodiments of the present disclosure, there is provided a method for sending signals. The method is performed by a base station and includes:

determining first initial Resource Elements (REs) where a first Demodulation Reference Signal (DMRS) of a Physical Downlink Control Channel (PDCCH) of a first system is located;
determining second initial REs where a reference signal of a second system is located;
determining candidate REs corresponding to the first DMRS by shift based on the first initial REs; wherein resources corresponding to the first initial REs and the second initial REs are same; and
sending the first DMRS on available REs of the candidate REs; wherein the available REs are unoccupied by another reference signal, and the another reference signal is a second DMRS or the reference signal of the second system.

In an example, determining the candidate REs corresponding to the first DMRS by shift based on the first initial REs includes:

determining a first shift range by shift based on the first initial REs; and
determining REs within the first shift range as the candidate REs.

In an example, determining the first shift range by shift based on the first initial REs includes:

performing sequential shift in a first direction in frequency domain based on the first initial REs; and
satisfying a first shift stop condition, then determining as the first shift range a frequency domain range obtained by performing shift in the first direction.

In an example, determining the first shift range by shift based on the first initial REs includes:

performing sequential shift in the first direction in frequency domain based on the first initial REs;
satisfying the first shift stop condition, then performing sequential shift in a second direction in frequency domain based on the first initial REs; and
satisfying the first shift stop condition again, then determining, as the first shift range, a frequency domain range obtained by performing the shift in the first direction and the second direction.

In an example, determining the first shift range by shift based on the first initial REs includes:

performing sequential shift in the first direction in frequency domain based on the first initial REs;
satisfying the first shift stop condition, then performing sequential shift in the second direction in frequency domain based on the first initial REs;
satisfying the first shift stop condition again, then shifting one time unit in a third direction in time domain based on the first initial REs;
continuing shift based on the shift sequence of the first direction, the second direction and the third direction; and
satisfying a second shift stop condition in case of performing the shift in the third direction, then determining, as the first shift range, a frequency domain range obtained by performing the shift in the first direction and the second direction and a time domain range obtained by performing the shift in the third direction.

In an example, the first direction is any one of:

a frequency-increasing direction; or

a frequency-decreasing direction.

In an example, the first direction is a frequency-increasing direction and the second direction is a frequency-decreasing direction; or,

the first direction is the frequency-decreasing direction and the second direction is the frequency-increasing direction.

In an example, the third direction is a time unit-increasing direction.

In an example, the first shift stop condition includes that a number of frequency domain resources corresponding to the shift is equal to a predetermined maximum number of frequency units;

the second shift stop condition includes that a number of time units corresponding to the shift is equal to a predetermined maximum number of time units.

In an example, the maximum number of frequency units is equal to 3.

In an example, the maximum number of time units is equal to a number of time units occupied by a Control Resource Set (CORESET) where the first DMRS is located.

In an example, the maximum number of frequency units may be determined by any one of the followings:

based on protocol predefinition; based on instruction of a signaling sent by base station; or based on terminal reporting capability.

In an example, the maximum number of time units may be determined by any one of the followings:

based on protocol predefinition; based on instruction of a signaling sent by base station; or based on terminal reporting capability.

In an example, sending the first DMRS on the available REs of the candidate REs includes:

sending the first DMRS on the available REs determined in a fourth direction; wherein the fourth direction is a shift direction which is determined from the first direction and the second direction and in which there is a maximum number of the available REs.

In an example, the method further includes:

determining that no available RE exists in the candidate Res, then not sending the first DMRS.

According to a fourth aspect of embodiments of the present disclosure, there is provided a method for sending signals. The method is performed by a base station and includes:

determining first initial Resource Elements (REs) where a first Demodulation Reference Signal (DMRS) of a Physical Downlink Control Channel (PDCCH) of a first system is located;

determining second initial REs where a reference signal of a second system is located;

determining available REs; wherein resources corresponding to the first initial REs and the second initial REs are same, the available REs are unoccupied by another reference signal within a first frequency domain range corresponding to the PDCCH, and the another reference signal includes a second DMRS or the reference signal of the second system; and

sending the first DMRS on the available REs.

In an example, determining the available REs includes:

determining a first proportion of the second initial REs within the first frequency domain range;

determining an available-RE index set based on the first proportion; wherein there is a preset correspondence between the first proportion and the available-RE index set;

removing the second initial REs within the first frequency domain range to obtain a candidate-RE set; and

determining the available REs in the candidate-RE set based on the available-RE index set.

In an example, determining the first proportion of the second initial REs within the first frequency domain range includes:

determining a ratio of a number of the second initial REs within the first frequency domain range to a total number of REs within the first frequency domain range to obtain the first proportion.

In an example, determining the available REs in the candidate-RE set based on the available-RE index set includes:

re-numbering each RE in the candidate-RE set in an ascending order based on a corresponding index, and determining an index value of each RE in the candidate-RE set; and

determining REs indicated by the available-RE index set in the candidate-RE set, as the available REs.

In an example, the first frequency domain range is any one of:

Bandwdith part (BWP) frequency domain range where the PDCCH is located;
one Resource Block (RB) range within a frequency domain range where the PDCCH is located; or
a CORESET frequency domain range corresponding to the PDCCH.

According to a fifth aspect of embodiments of the present disclosure, there is provided an apparatus for receiving signals, which includes:

a processing module, configured to determine first initial Resource Elements (REs) corresponding to a first Demodulation Reference Signal (DMRS) of a Physical Downlink Control Channel (PDCCH) of a first system;
the processing module being further configured to determine second initial REs corresponding to a reference signal of a second system;
the processing module being further configured to determine candidate REs corresponding to the first DMRS by shift based on the first initial REs; wherein resources corresponding to the first initial REs and the second initial REs are same; and
a receiving module, configured to detect and receive the first DMRS, on available REs of the candidate REs; wherein the available REs are unoccupied by another reference signal, and the another reference signal is a second DMRS or the reference signal of the second system.

According to a sixth aspect of embodiments of the present disclosure, there is provided an apparatus for receiving signals, which includes:

a processing module, configured to determine first initial Resource Elements (REs) where a first Demodulation Reference Signal (DMRS) of a Physical Downlink Control Channel (PDCCH) of a first system is located;
the processing module being further configured to determine second initial REs where a reference signal of a second system is located;
the processing module being further configured to determine available REs; wherein resources corresponding to the first initial REs and the second initial REs are same, the available REs are unoccupied by another reference signal within a first frequency domain range corresponding to the PDCCH, and the another reference signal includes a second DMRS or the reference signal of the second system; and
a receiving module, configured to detect and receive the first DMRS on the available REs.

According to a seventh aspect of embodiments of the present disclosure, there is provided an apparatus for sending signals, which includes:

a processing module, configured to determine first initial Resource Elements (REs) where a first Demodulation Reference Signal (DMRS) of a Physical Downlink Control Channel (PDCCH) of a first system is located;
the processing module being further configured to determine second initial REs where a reference signal of a second system is located;
the processing module being further configured to determine candidate REs corresponding to the first DMRS by shift based on the first initial REs; wherein resources corresponding to the first initial REs and the second initial REs are same; and
a sending module, configured to send the first DMRS on available REs of the candidate REs; wherein the available REs are unoccupied by another reference signal, and the another reference signal is a second DMRS or the reference signal of the second system.

According to an eighth aspect of embodiments of the present disclosure, there is provided an apparatus for sending signals, which includes:

a processing module, configured to determine first initial Resource Elements (REs) where a first Demodulation Reference Signal (DMRS) of a Physical Downlink Control Channel (PDCCH) of a first system is located;
the processing module being further configured to determine second initial REs where a reference signal of a second system is located;
the processing module being further configured to determine available REs; wherein resources corresponding to the first initial REs and the second initial REs are same, the available REs are unoccupied by another reference signal within a first frequency domain range corresponding to the PDCCH, and the another reference signal includes a second DMRS or the reference signal of the second system; and
a sending module, configured to sending the first DMRS on the available REs.

According to a ninth aspect of embodiments of the present disclosure, there is provided a computer readable storage medium, where the storage medium stores computer programs and the computer programs are used to execute the method for receiving signals of any one of the above items.

According to a tenth aspect of embodiments of the present disclosure, there is provided a computer readable storage medium, where the storage medium stores computer programs and the computer programs are used to execute the method for sending signals of any one of the above items.

According to an eleventh aspect of embodiments of the present disclosure, there is provided a communication apparatus, which includes:

a processor;
a memory storing processor executable instructions;
where the processor is configured to execute the executable instructions to perform the steps of the method for receiving signals of any one of the above items.

According to a twelfth aspect of embodiments of the present disclosure, there is provided a signal transmission apparatus, which includes:

a processor;
a memory storing processor executable instructions;
where the processor is configured to execute the executable instructions to perform the steps of the method for sending signals of any one of the above items.

The technical solutions provided by the embodiments of the present disclosure may include the following beneficial effects.

In the embodiments of the present disclosure, the interference of the reference signal from the LTE system to the DMRS of the NR PDCCH can be effectively avoided while the system capacity of the NR PDCCH can be improved, thereby improving the NR system performance.

It should be understood that the above general descriptions and subsequent detailed descriptions are only illustrations and examples rather than limiting of the present disclosure.

**BRIEF DESCRIPTION OF DRAWINGS**

The drawings herein incorporated into the specification and forming a part of the specification illustrate the embodiments consistent with the present disclosure and serve together with the specification to interpret the principle of the present disclosure.

FIGS. 1A to 1C are schematic diagrams illustrating a mapping relationship of a CRS on time and frequency domain resources according to an example of the present disclosure.

FIG. 2 is a CRS multiplexing schematic diagram illustrating a PCFICH and 4-port CRS according to an example of the present disclosure.

FIG. 3 is a flowchart illustrating a PCFICH according to an example of the present disclosure.

FIG. 4 is a multiplexing schematic diagram illustrating a PCFICH and a PHICH according to an example of the present disclosure.

FIG. 5A is a multiplexing schematic diagram illustrating a NR PDCCH DMRS and an LTE 4-port CRS according to an example of the present disclosure.

FIG. 5B is a schematic diagram illustrating coexistence of a NR PDCCH DMRS and an LTE reference signal according to an example of the present disclosure.

FIG. 6 is another multiplexing schematic diagram illustrating a NR PDCCH DMRS and an LTE 4-port CRS according to an example of the present disclosure.

FIG. 7 is another multiplexing schematic diagram illustrating a PCFICH and a PHICH according to an example of the present disclosure.

FIG. 8 is a flowchart illustrating a method for receiving signals according to an example of the present disclosure.

FIG. 9 is a flowchart illustrating another method for receiving signals according to an example of the present disclosure.

FIG. 10 is a flowchart illustrating another method for receiving signals according to an example of the present disclosure.

FIG. 11 is a flowchart illustrating another method for receiving signals according to an example of the present disclosure.

FIG. 12A is a flowchart illustrating another method for receiving signals according to an example of the present disclosure.

FIG. 12B is a flowchart illustrating another method for receiving signals according to an example of the present disclosure.

FIG. 13 is a flowchart illustrating another method for receiving signals according to an example of the present disclosure.

FIG. 14 is a flowchart illustrating another method for receiving signals according to an example of the present disclosure.

FIG. 15 is a flowchart illustrating a method for sending signals according to an example of the present disclosure.

FIG. 16 is a flowchart illustrating another method for sending signals according to an example of the present disclosure.

FIG. 17A is a schematic diagram illustrating determining available REs according to an example of the present disclosure.

FIG. 17B is another schematic diagram illustrating determining available REs according to an example of the present disclosure.

FIG. 18 is another schematic diagram illustrating determining available REs according to an example of the present disclosure.

FIG. 19 is another schematic diagram illustrating determining available REs according to an example of the present disclosure.

FIG. 20 is a block diagram illustrating an apparatus for receiving signals according to an example of the present disclosure.

FIG. 21 is a block diagram illustrating another apparatus for receiving signals according to an example of the present disclosure.

FIG. 22 is a block diagram illustrating an apparatus for sending signals according to an example of the present disclosure.

FIG. 23 is a block diagram illustrating another apparatus for sending signals according to an example of the present disclosure.

FIG. 24 is a structural schematic diagram illustrating an apparatus for receiving signals according to an example of the present disclosure.

FIG. 25 is a structural schematic diagram illustrating an apparatus for sending signals according to an example of the present disclosure.

## DETAILED DESCRIPTION

Examples will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present disclosure. Rather, they are merely examples of apparatuses and methods consistent with some aspects of the present disclosure as detailed in the appended claims.

The terms used in the present disclosure are for the purpose of describing particular examples only, and are not intended to limit the present disclosure. Terms determined by "a", "the" and "said" in their singular forms in the present disclosure and the appended claims are also intended to include plurality, unless clearly indicated otherwise in the context. It should also be understood that the term "and/or" as used herein refers to and includes any or all possible combinations of one or more of the associated listed items.

It is to be understood that, although the terms "first," "second," "third," and the like may be used in the present disclosure to describe various information, such information should not be limited to these terms. These terms are only used to distinguish one category of information from another. For example, without departing from the scope of the present disclosure, first information may be referred as second information; and similarly, the second information may also be referred as the first information. Depending on the context, the term "if" as used herein may be interpreted as "when" or "upon" or "in response to determining".

On a frequency band where an LTE and NR coexist, it is required to continuously send an LTE Cell-specific Reference Signal (CRS), which may bring quite strong interference to a NR system. In the current protocols, in order to prevent the strong interference of an LTE system from reducing the performance of a NR PDCCH, a NR terminal only detects those PDCCH candidates not overlapped with the LTE CRS. However, considering the LTE CRS supports at most four ports, the CRS at this time occupies six Orthogonal Frequency Division Multiplexing (OFDM) symbols in one slot. In this case, NR PDCCH can only be transmitted on remaining eight OFDM symbols and cannot be transmitted in the Control Resource Set (CORESET) with a duration as three continuous symbols, thereby severely affecting the capacity and transmission performance of NR PDCCH. In order to further improve the PDCCH resource utilization rate in a DSS scenario and increase the PDCCH capacity, Rel-18(Release-18, version 18) WID supports the transmission of NR PDCCH on the symbols where the CRS is located.

In the DSS scenario, the NR system may suffer strong and continuous interference from the CRS. If a NR Demodulation Reference Signal (DMRS) is transmitted on the resources occupied by CRS transmission, the PDCCH transmission performance will be severely affected.

From another perspective, Physical hybrid ARQ indicator channel (PHICH) and Physical control format indicator channel (PCFICH) are LTE cell-specific essential signals, and if REs occupied by transmission of the PHICH and the PCFICH are in conflict with REs occupied by NR PDCCH DMRS, severe interference will also be brought to the PDCCH, thereby reducing the PDCCH transmission performance.

Different from the CRS, control channels PHICH and PCFICH can, within a certain frequency domain range, be continuously transmitted in an LTE-defined Resource Element Group (REG) range, and the PHICH can be transmitted on 0-th, first and second OFDM symbols of one LTE subframe. The mapping rules for CRS, PHICH, PCFICH and NR DMRS in time and frequency domains are as follows:

**CRS:**

The CRS is mainly used for downlink channel quality detection, where indexes are such as Reference Signal Receiving Power (RSRP) and the like, and for downlink channel estimation and coherent demodulation for terminal side. At most four antenna ports can be configured for the CRS and the CRS can only be transmitted on subframes with a subcarrier spacing $\Delta f = 15$ kHz.

For CRS sequence symbols $r_{l,n_s}(m)$ transmitted on an antenna port $p$ in a slot $n_s$, the symbols have a following mapping relationship with OFDM resources $(k, l)$:

$$k = 6m + (v + v_{\text{shift}}) \bmod 6$$

$$l = \begin{cases} 0, N_{\text{symb}}^{\text{DL}} - 3 & \text{if } p \in \{0,1\} \\ 1 & \text{if } p \in \{2,3\} \end{cases}$$

$$m = 0, 1, \dots, 2 \cdot N_{\text{RB}}^{\text{DL}} - 1$$

$$m' = m + N_{\text{RB}}^{\text{max,DL}} - N_{\text{RB}}^{\text{DL}}$$

where the $N_{\text{RB}}^{\text{DL}}$ is equal to a number of RBs occupied by bandwidth configured for an LTE Down Link (DL), the $N_{\text{symb}}^{\text{DL}}$ is equal to a number of OFDM symbols occupied within one slot, the cell-specific symbol shift $v_{\text{shift}} = N_{\text{ID}}^{\text{cell}} \bmod 6$, the cell sequence number (PCI, $N_{\text{ID}}^{\text{cell}}$) is configured by higher-layer signaling, and the relationship of the variable $V$, the antenna port $p$ and the OFDM symbol $l$ is as follows:

$$v = \begin{cases} 0 & \text{if } p = 0 \text{ and } l = 0 \\ 3 & \text{if } p = 0 \text{ and } l \neq 0 \\ 3 & \text{if } p = 1 \text{ and } l = 0 \\ 0 & \text{if } p = 1 \text{ and } l \neq 0 \\ 3(n_s \bmod 2) & \text{if } p = 2 \\ 3 + 3(n_s \bmod 2) & \text{if } p = 3 \end{cases}$$

It should be noted that if a resource element $(k, l)$ is used to transmit CRS of a specific antenna port, the resource cannot be used for CRS resource transmission of other antenna ports.

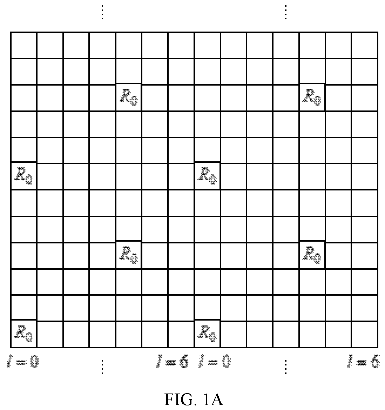

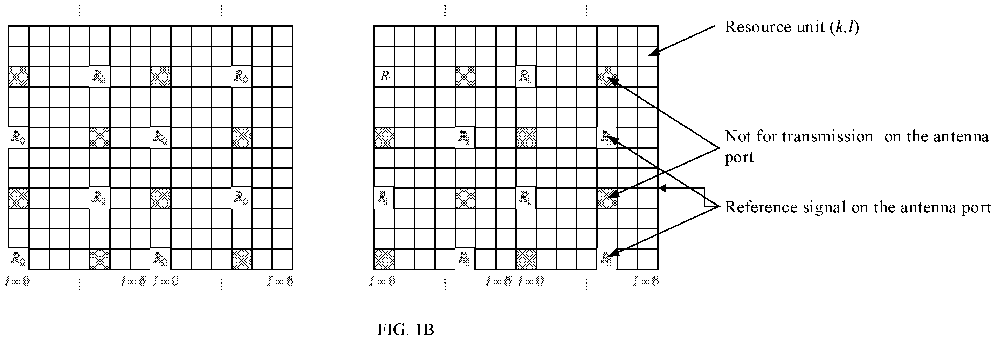

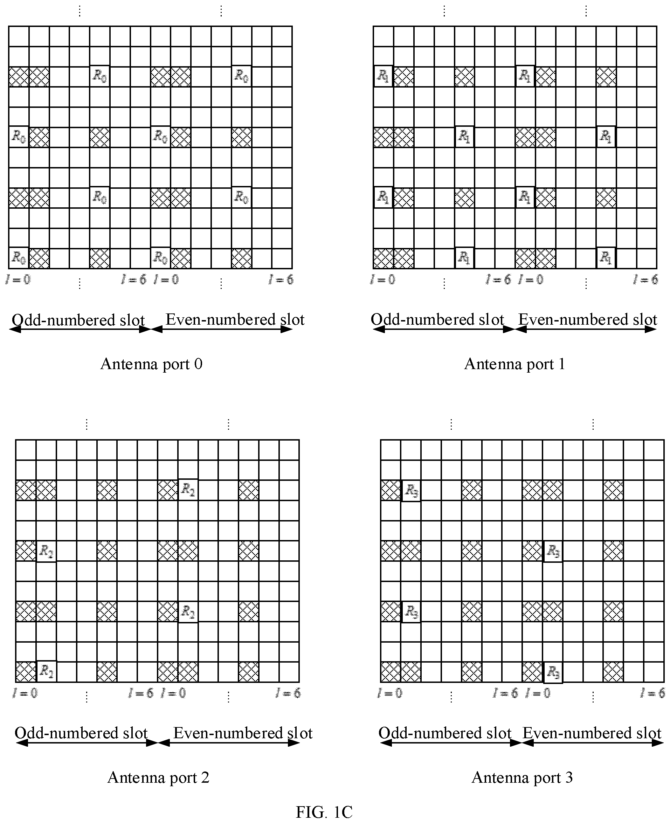

For different antenna ports, the mapping relationship of the corresponding CRS in time and frequency domain resources is, for example, shown in FIGS. 1A to 1C ($v_{shift}$ =0), and numbers of respective corresponding CRS antenna ports are 1, 2 and 4.

**PCFICH:**

The PCFICH channel, i.e., physical control format indicator channel, carries information Control Field Indicator (CFI) for indicating a number of OFDM symbols occupied by control channels (PDCCH and PHICH) in a subframe. The CFI carries 2 bits of information which is modulated by Quadrature Phase Shift Keying (QPSK).

Considering a size of control area can be known only by decoding out the PCFICH channel, the PCFICH channel is always mapped to a first OFDM symbol of a downlink subframe or a downlink pilot slot (DwPTS). Furthermore, in order to obtain a diversity gain in frequency domain, four REGs forming the PCFICH channel will be uniformly distributed in the whole bandwidth.

For a i-th resource group mapped by the antenna port $p$, the REG corresponding to the i-th resource group contains a RE index below:

$z^{(p)}(0)$ is mapped to the resource-element group represented by $k = \overline{k}$

$z^{(p)}(1)$ is mapped to the resource-element group represented by $k = \overline{k} + \left\lfloor N_{RB}^{DL}/2 \right\rfloor \cdot N_{sc}^{RB}/2$

$z^{(p)}(2)$ is mapped to the resource-element group represented by $k = \overline{k} + \left\lfloor 2N_{RB}^{DL}/2 \right\rfloor \cdot N_{sc}^{RB}/2$

$z^{(p)}(3)$ is mapped to the resource-element group represented by $k = \overline{k} + \left\lfloor 3N_{RB}^{DL}/2 \right\rfloor \cdot N_{sc}^{RB}/2$

where the start offset position is $\overline{k} = \left( N_{sc}^{RB}/2 \right) \cdot \left( N_{ID}^{cell} \bmod 2N_{RB}^{DL} \right)$, and the $N_{sc}^{RB}$ is a number of REs occupied by one REG.

It is noted that the REG is formed of four continuous REs other than cell-specific reference signals in a cell. If a RE is reserved for the cell-specific reference signal (CRS), this RE cannot be used to form the REG. Further, the four REs belonging to one REG should be located within one OFDM symbol.

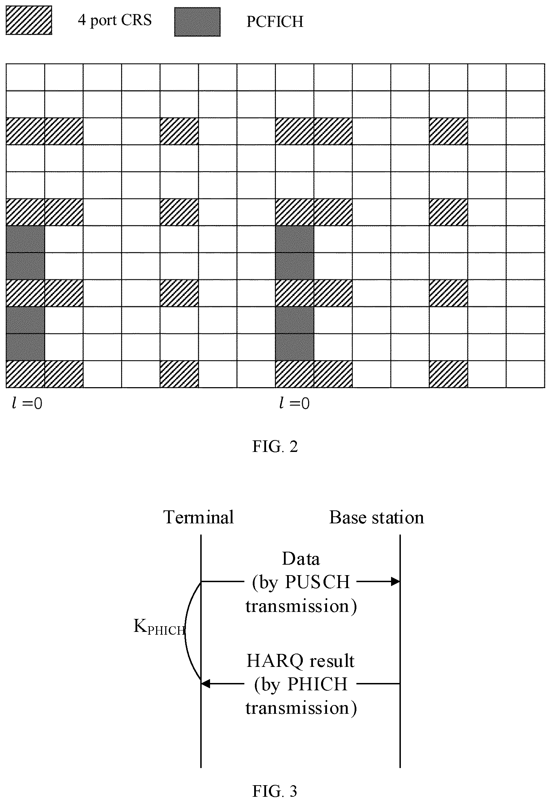

Taking $\overline{k} = v_{shift}$ =0 and 4-port CRS as example, a corresponding frequency domain position is as shown in FIG. 2.

**PHICH:**

The PHICH carries Acknowledge (ACK) and Non-Acknowledge (NACK) information of a Hybrid Automatic Repeat Request (HARQ), and the base station notifies a UE through the PHICH whether one transmission is correctly received on the PUSCH. The terminal may, based on the information indicated by the PHICH, determine whether to retransmit or send new data to the base station, as shown in FIG. 3.

An i-th (correspondingly mapped to the $i \in$ {0, 1, 2}-th REG) PHICH sequence mapped to the antenna port $p$ is defined as:

$$z^{(p)}(i) = \left\langle \tilde{y}^{(p)}(4i), \tilde{y}^{(p)}(4i+1), \tilde{y}^{(p)}(4i+2), \tilde{y}^{(p)}(4i+3) \right\rangle$$

The sequence $z^{(p)}(i)$ belongs to the PHICH group $m'$ (for extended CP, $m' = m/2$, where m is a PHICH group index), and the mapped REs $(k',l')_i$ satisfy the following conditions:

$$l'_i = \begin{cases} 0 & \textit{normal PHICH duration, all subframes} \\ \left( \left\lfloor m'/2 \right\rfloor + i + 1 \right) \bmod 2 & \textit{extended PHICH duration, MBSFN subframes} \\ \left( \left\lfloor m'/2 \right\rfloor + i + 1 \right) \bmod 2 & \textit{extended PHICH duration, subframes 1 and 6 in a structure type 2} \\ \left( \left\lfloor m'/2 \right\rfloor + i + 1 \right) \bmod 2 & \textit{extended PHICH duration,} \\ & \textit{subframes having the same duration as DwPTS in a structure type 3} \\ i & \textit{others} \end{cases}$$

The PHICH duration is configured by a higher-layer parameter *phich-duration,* which is referred to in the protocol 36.211.

For the frequency domain index $k'_i$ and the mapping REG $\overline{n}_i$, the $n_{l'}$ is defined as the number of PCFICH REGs unassigned on the OFDM symbols *l'* in the subframes; in the scenario where the higher-layer parameter *phich-duration* indicates normal CP,

$$\overline{n}_i = \begin{cases} \left(\left\lfloor N_{\text{ID}}^{\text{cell}} \cdot n_{l'_i}/n_0 \right\rfloor + m'\right) \bmod n_{l'_i} & i = 0 \\ \left(\left\lfloor N_{\text{ID}}^{\text{cell}} \cdot n_{l'_i}/n_0 \right\rfloor + m' + \left\lfloor n_{l'_i}/3 \right\rfloor\right) \bmod n_{l'_i} & i = 1 \\ \left(\left\lfloor N_{\text{ID}}^{\text{cell}} \cdot n_{l'_i}/n_0 \right\rfloor + m' + \left\lfloor 2 n_{l'_i}/3 \right\rfloor\right) \bmod n_{l'_i} & i = 2 \end{cases}$$

where, in a scenario of the extended PHICH duration in the MBSFN subframes, or the extended PHICH duration in the subframes 1 and 6 of the frame structure type 2, or the extended PHICH duration in the subframes having the same duration as DwPTS configured by special subframes in the frame structure type 3, a corresponding REG index is as follows:

$$\overline{n}_i = \begin{cases} \left(\left\lfloor N_{\text{ID}}^{\text{cell}} \cdot n_{l'_i}/n_1 \right\rfloor + m'\right) \bmod n_{l'_i} & i = 0 \\ \left(\left\lfloor N_{\text{ID}}^{\text{cell}} \cdot n_{l'_i}/n_1 \right\rfloor + m' + \left\lfloor n_{l'_i}/3 \right\rfloor\right) \bmod n_{l'_i} & i = 1 \\ \left(\left\lfloor N_{\text{ID}}^{\text{cell}} \cdot n_{l'_i}/n_1 \right\rfloor + m' + \left\lfloor 2 n_{l'_i}/3 \right\rfloor\right) \bmod n_{l'_i} & i = 2 \end{cases}$$

With Time Division Duplex(TDD) extended PHICH duration as example, the $N_{\text{ID}}^{\text{cell}} = 0$, $N_{\text{RB}}^{\text{DL}} = 25$ (5MHz), the $m_i$ = 1 (uplink-downlink configuration=0, the subframe 0), the $m_i N_{\text{PHICH}}^{\text{group}} = \left\lceil N_g \left(N_{\text{RB}}^{\text{DL}}/8\right)\right\rceil = 7$, where the $N_g$ = 2, 4-port CRS, and time domain positions corresponding to the PHICH are as follows:

$$l'_0 = 0, \quad n_{l'_0} = 50\text{-}4 = 46,$$

$$l'_1 = 1, \quad n_{l'_1} = 2*25 = 50,$$

$$l'_2 = 2, \quad n_{l'_2} = 3*25 = 75,$$

The frequency domain positions are as shown below:

$$\text{at the time of } m' = 0, \quad \overline{n}_0 = 0, \quad \overline{n}_1 = 16, \quad \overline{n}_2 = 50,$$

$$\text{at the time of } m' = 1, \quad \overline{n}_0 = 1, \quad \overline{n}_1 = 17, \quad \overline{n}_2 = 51,$$

$$\cdots$$

$$\text{at the time of } m' = 6, \quad \overline{n}_0 = 6, \quad \overline{n}_1 = 22, \quad \overline{n}_2 = 56,$$

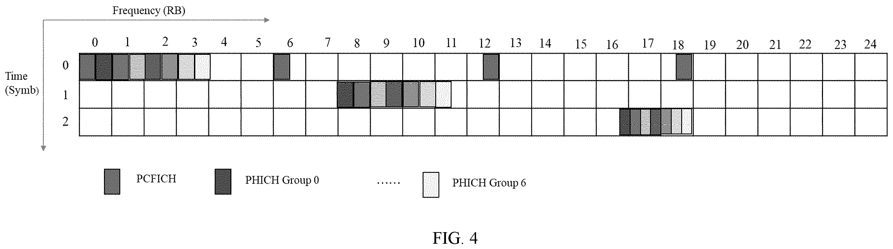

the frequency domain positions corresponding to the PHICH and PCFICH are as shown in FIG. 4.

PDCCH DMRS:

Sequence generation:

for OFDM symbol *l* within one slot, a corresponding sequence $r_l(m)$ is equal to:

$$r_l(m) = \frac{1}{\sqrt{2}}\left(1 - 2\cdot c(2m)\right) + j\frac{1}{\sqrt{2}}\left(1 - 2\cdot c(2m+1)\right)$$

the $c(i)$ is a pseudo-random sequence and its initial value is:

$$c_{init} = \left(2^{17}\left(N_{symb}^{slot}n_{s,f}^{\mu} + l + 1\right)(2N_{ID} + 1) + 2N_{ID}\right)\bmod 2^{31}$$

where the $n_{s,f}^{\mu}$ is an in-frame slot index, $N_{ID} \in \{0,1,...,65535\}$ is configured by the higher-layer parameter pdcch-DMRS-ScramblingID and otherwise $N_{ID} = N_{ID}^{cell}$.

Resource mapping:

$$a_{k,l}^{(p,\mu)} = \beta_{DMRS}^{PDCCH} \cdot r_{k,l}^{(dmrs)}$$

when the sequence $r_l(m)$ is mapped to the resource elements $(k,l)_{p,\mu}$, the following rule should be followed:

$$a_{k,l}^{(p,\mu)} = \beta_{DMRS}^{PDCCH} \cdot r_l(3n + k')$$

$$k = nN_{sc}^{RB} + 4k' + 1$$

$$k' = 0,1,2$$

$$n = 0,1,...$$

where the $\beta_{PDSCH}^{DMRS}$ is a transmission power parameter, the k is a subcarrier index in OFDM symbol, the l is a symbol index in slot, and the antenna port *p* = 2000.

Based on the above formula, within the RBs where the PDCCH DMRS is present, the DMRS is transmitted on a first, fifth and ninth subcarriers in one RB.

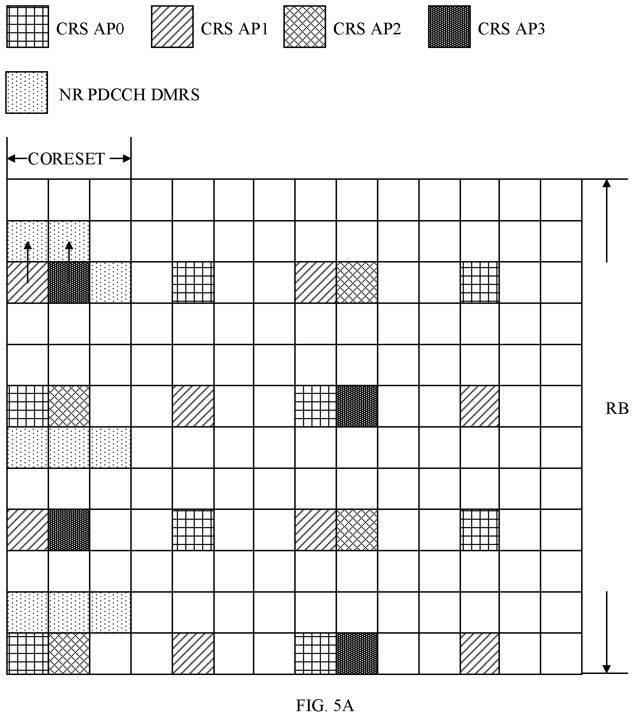

When the NR PDCCH DMRS is in conflict with the LTE CRS RE, the NR PDCCH DMRS RE shifts in frequency domain until no conflict with the LTE CRS is present to perform rate matching around CRS, but the DMRS for PDSCH demodulation still requires to have no conflict with the CRS, as shown in FIG. 5A.

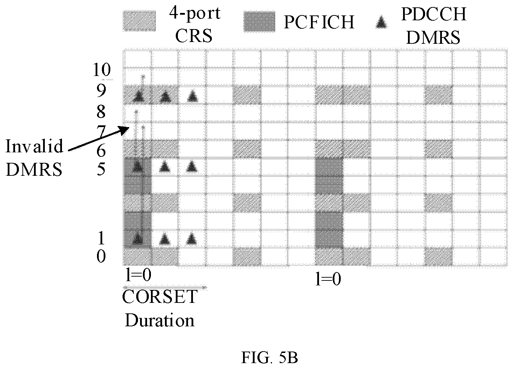

As mentioned above, similar to CRS, the PHICH and PCFICH, as the essential cell-specific control channels of LTE, can also cause strong interference to the NR PDCCH DMRS; in the scenario of presence of PHICH and/or PCFICH, based on the existing mechanism, the NR PDCCH DMRS shifts REs in frequency domain to avoid conflicts. In the scenario of coexistence of PCFICH and/or PHICH and CRS, the DMRS possibly needs to shift several REs, and the channel estimation error of the corresponding DMRS on the REs is large, as shown in FIG. 5B.

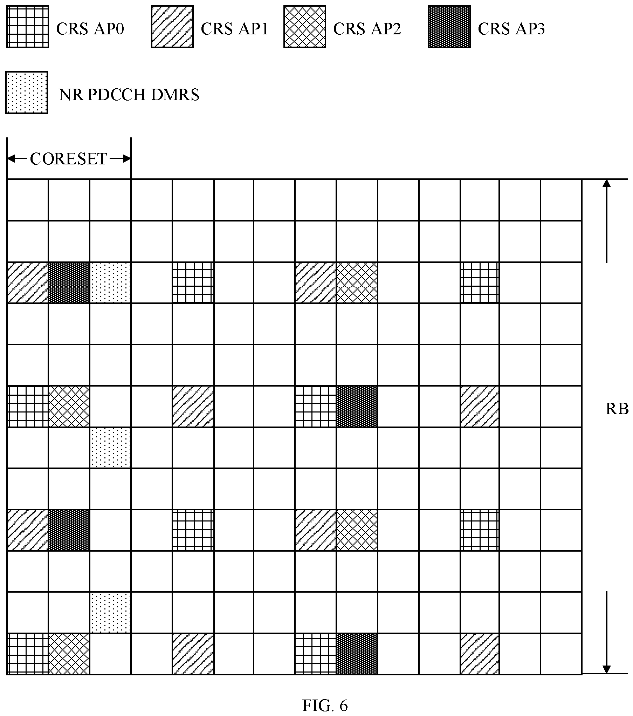

On the OFDM symbols for transmitting LTE CRS, the DMRS may not be transmitted. And the DMRS can be transmitted only on symbols without LTE CRS. This scenario is applicable to the scenario where the symbols not transmitting LTE CRS are present within the PDCCH CORESET time domain range, as shown in FIG. 6.

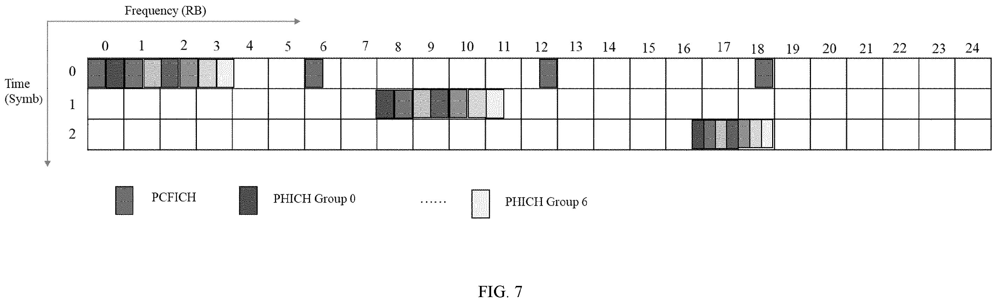

If based on relevant mechanism, the DMRS is transmitted only on the symbols not transmitting LTE reference signal, the PDCCH CORESET occupies a maximum length of 3 OFDM symbols under the existing mechanism. In some scenarios, the PHICH may occupy all OFDM symbols where the CORESET is located and there are no scenarios where the corresponding symbols within the CORESET do not transmit CRS, as shown in FIG. 7.

When the LTE system and the NR system coexist in a same frequency band, the presence of the LTE CRS, PCFICH and PHICH may cause severe interference to the PDCCH and thus its capacity can be severely limited, thereby limiting the performance and scheduling flexibility of the NR system.

In order to address the above technical issues, the present disclosure provides the following methods and apparatuses for receiving signals and for sending signals, and storage medium.

The method for receiving signals of the present disclosure will be firstly described below from the terminal side.

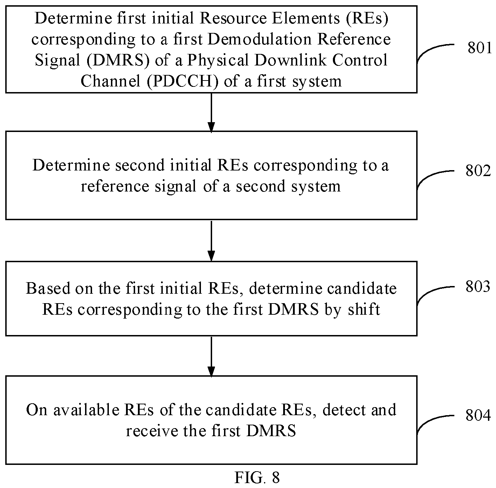

One or more embodiments of the present disclosure provide a method for receiving signals. As shown in FIG. 8, it is a flowchart illustrating a method for receiving signals according to an example of the present disclosure. The method may be executed by a terminal. The method may include the following steps.

At step 801, first initial Resource Elements (REs) corresponding to a first Demodulation Reference Signal (DMRS) of a Physical Downlink Control Channel (PDCCH) of a first system are determined.

In the embodiments of the present disclosure, the first system may be an NR system, the first DMRS may be any DMRS corresponding to the PDCCH of the NR system, and the terminal may, based on a DMRS-related mechanism determined by existing protocols, determine the first initial REs.

At step 802, second initial REs corresponding to a reference signal of a second system are determined.

In the embodiments of the present disclosure, the second system may be an LTE system, the reference signal of the second system may be at least one of CRS, PCFICH or PHICH of the LTE, and the terminal may determine the second initial REs based on the above relevant mechanism of CRS, PCFICH and PHICH.

If the reference signal of the second system is PCFICH or PHICH, similar to the CRS, the NR terminal may determine the second initial REs based on the relevant signaling and 36.211 relevant mechanism.

At step 803, based on the first initial REs, candidate REs corresponding to the first DMRS are determined by shift.

In the embodiments of the present disclosure, the terminal may determine the candidate REs by shift when resources corresponding to the first initial REs and the second initial REs are same. The resources are same, which includes but not limited to that the time domain resources are same and the frequency domain resources are same. The number of the candidate REs may be one or more, which is not limited in the present disclosure.

At step 804, on available REs of the candidate REs, the first DMRS is detected and received.

In the embodiments of the present disclosure, the available REs refer to those REs not occupied by another reference signal in the candidate REs. The another reference signal may be any second DMRS different from the first DMRS or the reference signal of the second system. The reference signal of the second system may be at least one of CRS, PCFICH and PHICH of the LTE.

In the above embodiments, the terminal side may determine the candidate REs by shift in frequency domain and/or time domain and detect and receive the first DMRS on the available REs of the candidate REs. In the DSS scenario, the interference of the reference signal from the LTE system for the DMRS of the NR PDCCH can be effectively avoided while the system capacity of the NR PDCCH can be improved, thereby improving the NR system performance.

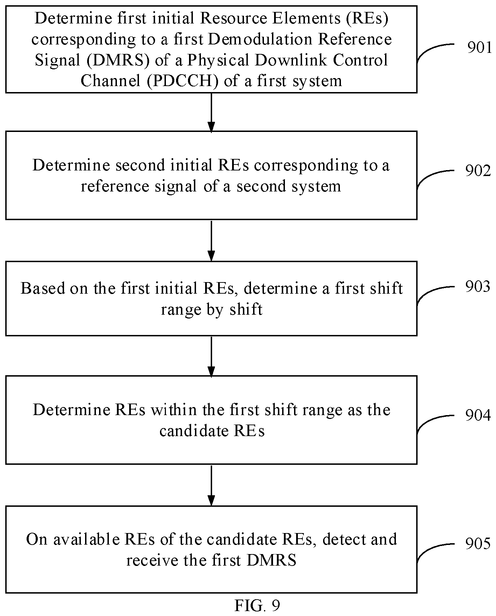

In some optional embodiments, as shown in FIG. 9, it is a flowchart illustrating a method for receiving signals according to an example. The method may be executed by a terminal and the method may include the following steps.

At step 901, first initial Resource Elements (RE) corresponding to a first Demodulation Reference Signal (DMRS) of a Physical Downlink Control Channel (PDCCH) of a first system are determined.

In the embodiments of the present disclosure, the first system may be an NR system, the first DMRS may be any DMRS corresponding to the PDCCH of the NR system, and the terminal may determine the first initial REs based on the above DMRS-related mechanism.

At step 902, second initial REs corresponding to a reference signal of a second system are determined.

In the embodiments of the present disclosure, the second system may be an LTE system, the reference signal of the second system may be at least one of CRS, PCFICH or PHICH of the LTE, and the terminal may determine the second initial REs based on the above relevant mechanism of CRS, PCFICH and PHICH.

If the reference signal of the second system is PCFICH or PHICH, similar to the CRS, the NR terminal may determine the second initial REs based on the relevant signaling and 36.211 relevant mechanism.

At step 903, based on the first initial REs, a first shift range is determined by shift.

At step 904, REs within the first shift range are determined as the candidate REs.

In the embodiments of the present disclosure, all REs within the first shift range may be determined as the candidate REs.

At step 905, on available REs of the candidate REs, the first DMRS is detected and received.

In the embodiments of the present disclosure, the available REs refer to those REs not occupied by another reference signal in the candidate REs. The another reference signal may be any second DMRS different from the first DMRS or the reference signal of the second system. The reference signal of the second system may be at least one of CRS, PCFICH or PHICH of the LTE.

In the above embodiments, the terminal may determine all REs in the first shift range as the candidate REs to perform rate matching around the reference signal of the LTE system, determine the available REs, and detect and receive the first DMRS on the available REs. In the DSS scenario, the interference of the reference signal from the LTE system for the DMRS of the NR PDCCH can be effectively avoided while the system capacity of the NR PDCCH can be improved, thereby improving the NR system performance.

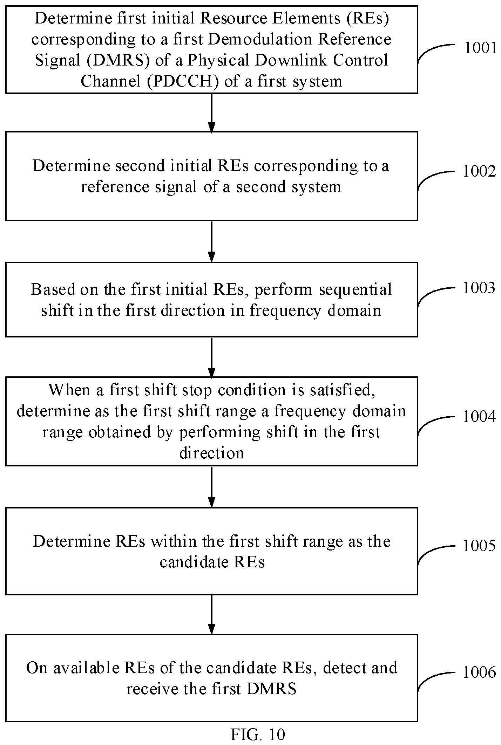

In some optional embodiments, as shown in FIG. 10, it is a flowchart illustrating a method for receiving signals according to an example. The method may be executed by a terminal and the method may include the following steps.

At step 1001, first initial Resource Elements (RE) corresponding to a first Demodulation Reference Signal (DMRS) of a Physical Downlink Control Channel (PDCCH) of a first system are determined.

In the embodiments of the present disclosure, the first system may be an NR system, the first DMRS may be any DMRS corresponding to the PDCCH of the NR system, and the terminal may determine the first initial REs based on the above DMRS-related mechanism.

At step 1002, second initial REs corresponding to a reference signal of a second system are determined.

In the embodiments of the present disclosure, the second system may be an LTE system, the reference signal of the second system may be at least one of CRS, PCFICH or PHICH of the LTE, and the terminal may determine the second initial REs based on the above relevant mechanism of CRS, PCFICH and PHICH.

If the reference signal of the second system is PCFICH or PHICH, similar to the CRS, the NR terminal may determine the second initial REs based on the relevant signaling and 36.211 relevant mechanism.

At step 1003, based on the first initial REs, sequential shift is performed in a first direction in frequency domain.

In the embodiments of the present disclosure, the first direction may be a frequency-increasing direction or a frequency-decreasing direction. The first direction may be determined by protocol or indicated by a signaling from the base station, which is not limited herein.

At step 1004, when a first shift stop condition is satisfied, a frequency domain range obtained by performing shift in the first direction is determined as the first shift range.

In the embodiments of the present disclosure, the first shift stop condition includes that a number of frequency domain resources corresponding to the shift is equal to a predetermined maximum number of frequency units.

The predetermined maximum number of frequency units "delta" may be determined based on protocol predefinition, or determined based on a signaling instruction from the base station or determined based on terminal reporting capability, which is not limited herein.

In an example, since the DMRS is transmitted on the first, fifth and ninth subcarrier within one RB, if the first DMRS is transmitted on the first subcarrier within the RB, the number of REs between the first subcarrier and the fifth subcarrier may be used as the maximum number of frequency units, that is, the maximum number of frequency units "delta" is 3.

In one possible implementation, the terminal may perform sequential shift in the frequency-increasing direction based on the first initial REs and stop shift when the number of the REs corresponding to the shift is 3. The frequency domain range obtained at this time may be determined as the first shift range.

It is noted that the maximum number of frequency units herein is a maximum number of REs of the shift at the time of performing shift in the frequency-increasing direction based on the first initial REs, and the number of the REs of the shift performed by the terminal in the frequency-increasing or frequency-decreasing direction may be less than or equal to 3, for example, may be 1, 2, or 3.

In one possible implementation, the terminal may perform sequential shift in the frequency-decreasing direction based on the first initial REs and stop shift when the number of the REs corresponding to the shift is the maximum number of frequency units. The frequency domain range obtained at this time may be determined as the first shift range.

At step 1005, REs within the first shift range are determined as the candidate REs.

At step 1006, on available REs of the candidate REs, the first DMRS is detected and received.

In the embodiments of the present disclosure, the available REs refer to those REs not occupied by another reference signal in the candidate REs. The another reference signal may be any second DMRS different from the first DMRS or the reference signal of the second system. The reference signal of the second system may be at least one of CRS, PCFICH or PHICH of the LTE.

In one possible implementation, the candidate REs include a plurality of available REs, the terminal may perform shift in the first direction based on the first initial REs, and on the available REs with the fewest shift, the first DMRS is detected and received.

In one possible implementation, the step 1006 may be replaced with step 1007 (not shown in FIG. 10).

At step 1007, when no available REs in the candidate REs are determined, the first DMRS is not received.

In the above embodiments, rate matching may be performed around the reference signal of the LTE system so as to detect and receive the first DMRS on the available REs. If no available REs are present in the candidate REs, the terminal may perform puncturing on the first DMRS, i.e., does not receive the first DMRS. In the DSS scenario, the interference of the reference signal from the LTE system to the DMRS of the NR PDCCH can be effectively avoided while the system capacity of the NR PDCCH can be improved, thereby improving the NR system performance.

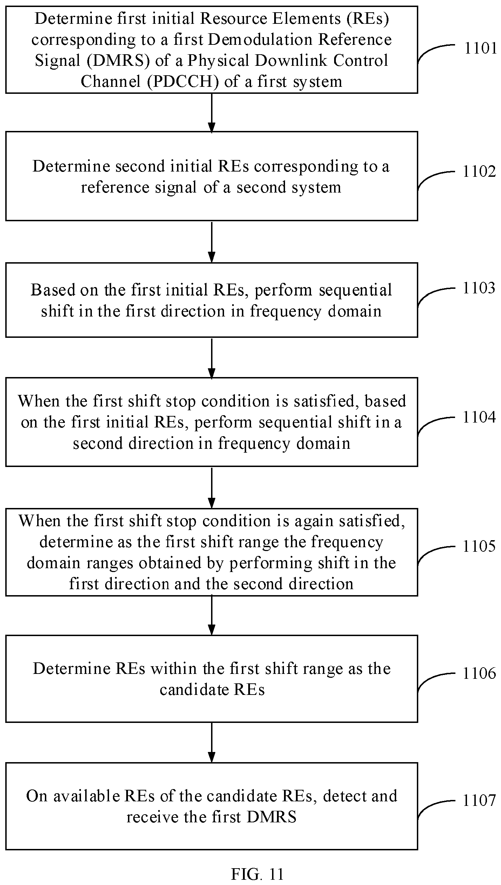

In some optional embodiments, as shown in FIG. 11, it is a flowchart illustrating a method for receiving signals according to an example. The method may be executed by a terminal and the method may include the following steps.

At step 1101, first initial Resource Elements (RE) corresponding to a first Demodulation Reference Signal

(DMRS) of a Physical Downlink Control Channel (PDCCH) of a first system are determined.

In the embodiments of the present disclosure, the first system may be an NR system, the first DMRS may be any DMRS corresponding to the PDCCH of the NR system, and the terminal may determine the first initial REs based on the above DMRS-related mechanism.

At step 1102, second initial REs corresponding to a reference signal of a second system are determined.

In the embodiments of the present disclosure, the second system may be an LTE system, the reference signal of the second system may be at least one of CRS, PCFICH and PHICH of the LTE, and the terminal may determine the second initial REs based on the above relevant mechanism of CRS, PCFICH and PHICH.

If the reference signal of the second system is PCFICH or PHICH, similar to the CRS, the terminal may determine the second initial REs based on the relevant signaling and 36.211 relevant mechanism.

At step 1103, based on the first initial REs, sequential shift is performed in a first direction in frequency domain.

In the embodiments of the present disclosure, the first direction may be a frequency-increasing direction or a frequency-decreasing direction. The first direction may be determined by protocol or indicated by a signaling from the base station, which is not limited herein.

At step 1104, a first shift stop condition is satisfied, and based on the first initial REs, sequential shift is performed in a second direction in frequency domain.

In the embodiments of the present disclosure, the first shift stop condition may include that a number of frequency domain resources corresponding to the shift is equal to a predetermined maximum number of frequency units.

In one possible implementation, the predetermined maximum number of frequency units may be determined based on protocol predefinition, or determined based on a signaling instruction from the base station or determined based on terminal reporting capability, which is not limited herein. In an example, the maximum number of frequency units may be 3.

In the embodiments of the present disclosure, when the terminal performs sequential shift in the first direction and satisfies the first shift stop condition, the terminal may perform sequential shift in the second direction in frequency domain based on the first initial REs. The first direction is the frequency-increasing direction and the second direction is the frequency-decreasing direction, or the first direction is the frequency-decreasing direction and the second direction is the frequency-increasing direction.

At step 1105, when the first shift stop condition is satisfied again, the frequency domain ranges obtained by performing shift in the first direction and the second direction are determined as the first shift range.

In the embodiments of the present disclosure, the frequency domain ranges obtained by performing shift in the above directions are determined as the first shift range.

For example, the DMRS is transmitted on the first, fifth and ninth subcarriers within one RB and the first initial RE index corresponding to the first DMRS is 5, and thus shift may be performed in the frequency-increasing direction until the RE with the index 8, and with the index 5 as a start point, shift is performed in the frequency-decreasing direction until the RE with the index 2. The frequency domain range corresponding to these REs may be determined as the first shift range.

At step 1106, REs within the first shift range are determined as the candidate REs.

At step 1107, on available REs of the candidate REs, the first DMRS is detected and received.

In the embodiments of the present disclosure, the available REs refer to those REs not occupied by another reference signal in the candidate REs. The another reference signal may be any second DMRS different from the first DMRS or the reference signal of the second system. The reference signal of the second system may be at least one of CRS, PCFICH or PHICH of the LTE.

In one possible implementation, the candidate REs include a plurality of available REs and the terminal may, on the available REs determined in a fourth direction, detect and receive the first DMRS. The fourth direction is a shift direction of the first direction and the second direction, in which a maximum number of the available REs is determined.

Furthermore, the terminal may perform shift in the fourth direction based on the first initial REs, and on the available REs with the fewest shift, detect and receive the first DMRS.

For example, the number of the available REs determined in the first direction may be 1, and the number of the available REs determined in the second direction may be 2, and thus the fourth direction is the second direction. Furthermore, the terminal may perform shift in the second direction based on the first initial REs and on the available REs with the fewest shift, detect and receive the first DMRS.

In one possible implementation, the step 1107 may be replaced with the step 1108 (not shown in FIG. 11).

At step 1108, when no available REs in the candidate REs are determined, the first DMRS is not received.

In the above embodiments, rate matching may be performed around the reference signal of the LTE system so as to detect and receive the first DMRS on the available REs. If no available REs are present in the candidate REs, the terminal may perform puncturing on the first DMRS, i.e., does not receive the first DMRS. In the DSS scenario, the interference of the reference signal from the LTE system for the DMRS of the NR PDCCH can be effectively avoided while the system capacity of the NR PDCCH can be improved, thereby improving the NR system performance.

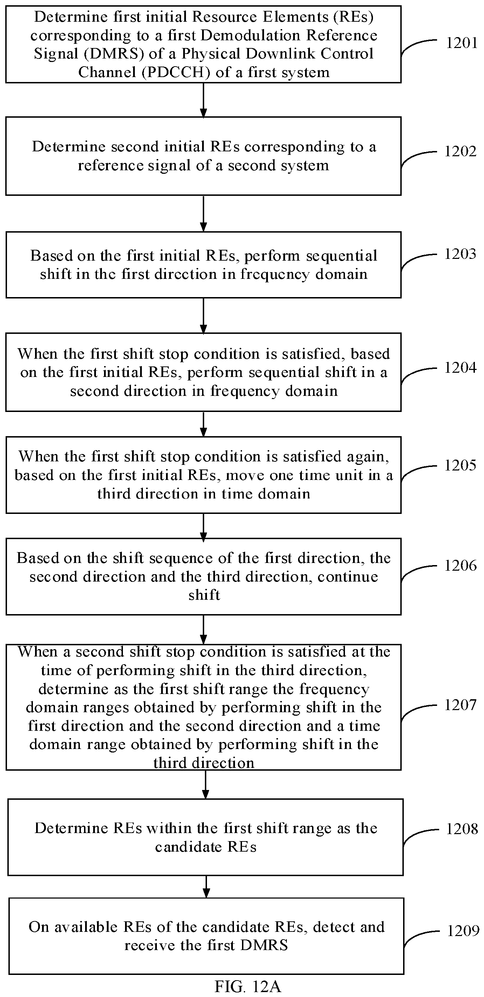

In some optional embodiments, as shown in FIG. 12A, it is a flowchart illustrating a method for receiving signals according to an example. The method may be executed by a terminal and the method may include the following steps.

At step 1201, first initial Resource Elements (RE) corresponding to a first Demodulation Reference Signal (DMRS) of a Physical Downlink Control Channel (PDCCH) of a first system are determined.

In the embodiments of the present disclosure, the first system may be an NR system, the first DMRS may be any DMRS corresponding to the PDCCH of the NR system, and the terminal may determine the first initial REs based on the above DMRS-related mechanism.

At step 1202, second initial REs corresponding to a reference signal of a second system are determined.

In the embodiments of the present disclosure, the second system may be an LTE system, the reference signal of the second system may be at least one of CRS, PCFICH or PHICH of the LTE, and the terminal may determine the second initial REs based on the above relevant mechanism of CRS, PCFICH and PHICH.

If the reference signal of the second system is PCFICH or PHICH, similar to the CRS, the NR terminal may determine the second initial REs based on the relevant signaling and 36.211 relevant mechanism.

At step 1203, based on the first initial REs, sequential shift is performed in a first direction in frequency domain.

In the embodiments of the present disclosure, the first direction may be a frequency-increasing direction or a frequency-decreasing direction. The first direction may be determined by protocol or indicated by a signaling from the base station, which is not limited herein.

At step 1204, when a first shift stop condition is satisfied, based on the first initial REs, sequential shift is performed in a second direction in frequency domain.

In the embodiments of the present disclosure, the first shift stop condition includes that a number of moved frequency domain resources is equal to a predetermined maximum number of frequency resources;

In one possible implementation, the maximum number of frequency resources "delta" may be determined based on protocol predefinition, or determined based on a signaling instruction from the base station or determined based on terminal reporting capability. In an example, the maximum number of frequency resources may be 3.

In the embodiments of the present disclosure, when the terminal performs sequential shift in the first direction and satisfies the first shift stop condition, the terminal may perform sequential shift in the second direction in frequency domain based on the first initial REs. The first direction is the frequency-increasing direction and the second direction is the frequency-decreasing direction, or the first direction is the frequency-decreasing direction and the second direction is the frequency-increasing direction.

At step 1205, when the first shift stop condition is satisfied again, one time unit is shifted in a third direction in time domain.

In the embodiments of the present disclosure, the third direction is a time unit-increasing direction.

At step 1206, based on a shift sequence of the first direction, the second direction and the third direction, shift is continued.

In the embodiments of the present disclosure, the terminal may move one time unit in the third direction in time domain, and then based on the first initial REs, perform sequential shift in the first direction in the frequency domain corresponding to the time unit after the movement until the first shift stop condition is satisfied, and the terminal may, based on the first initial REs, perform sequential shift in the second direction in the frequency domain corresponding to the time unit after the movement until the first shift stop condition is satisfied again. Then, the terminal may continue moving one time unit in the third direction in time domain. The first shift stop condition includes that a number of frequency domain resources corresponding to the shift is equal to a number of frequency domain resources occupied by the control resource set where the first DMRS is located.

Based on the above process, shift is continued based on a mode of shift in frequency domain and then time domain.

At step 1207, when a second shift stop condition is satisfied at the time of performing shift in the third direction, the frequency domain ranges obtained by performing shift in the first direction and the second direction and a time domain range obtained by performing shift in the third direction are determined as the first shift range.

In the embodiments of the present disclosure, the second shift stop condition includes that a number of time units corresponding to the shift is equal to a predetermined maximum number of time units.

In one possible implementation, the maximum number of time units may be determined based on protocol predefinition, or determined based on a signaling instruction from the base station or determined based on terminal reporting capability, which is not limited herein.

In one possible implementation, the maximum number of time units may be a number of time units occupied by the control resource set (CORESET) where the first DMRS is located. It is noted that when the terminal performs shift in the third direction, the number of the time units corresponding to the shift may be less than or equal to the maximum number of time units.

At step 1208, REs within the first shift range are determined as the candidate REs.

At step 1209, on available REs of the candidate REs, the first DMRS is detected and received.

In the embodiments of the present disclosure, the available REs refer to those REs not occupied by another reference signal in the candidate REs. The another reference signal may be any second DMRS different from the first DMRS or the reference signal of the second system. The reference signal of the second system may be at least one of CRS, PCFICH or PHICH of the LTE.

In one possible implementation, the candidate REs include a plurality of available REs, and the terminal may, on the available REs determined in a fourth direction, detect and receive the first DMRS. The fourth direction is a frequency domain shift direction in which a maximum number of the available REs is determined. Furthermore, the terminal may perform shift in the fourth direction based on the first initial REs and on the available REs with the fewest shift, detect and receive the first DMRS.

For example, the number of the available REs determined in the first direction may be 1, and the number of the available REs determined in the second direction may be 2, and thus the fourth direction is the second direction. Furthermore, the terminal may perform shift in the second direction based on the first initial REs and on the available REs with the fewest shift, detect and receive the first DMRS.

In one possible implementation, the step 1209 may be replaced with the step 1210 (not shown in FIG. 12A).

At step 1210, when no available REs in the candidate REs are determined, the first DMRS is not received.

In the above embodiments, rate matching may be performed around the reference signal of the LTE system so as to detect and receive the first DMRS on the available REs. If no available REs are present in the candidate REs, the terminal may perform puncturing on the first DMRS, i.e., does not receive the first DMRS. In the DSS scenario, the interference of the reference signal from the LTE system to the DMRS of the NR PDCCH can be effectively avoided while the system capacity of the NR PDCCH can be improved, thereby improving the NR system performance.

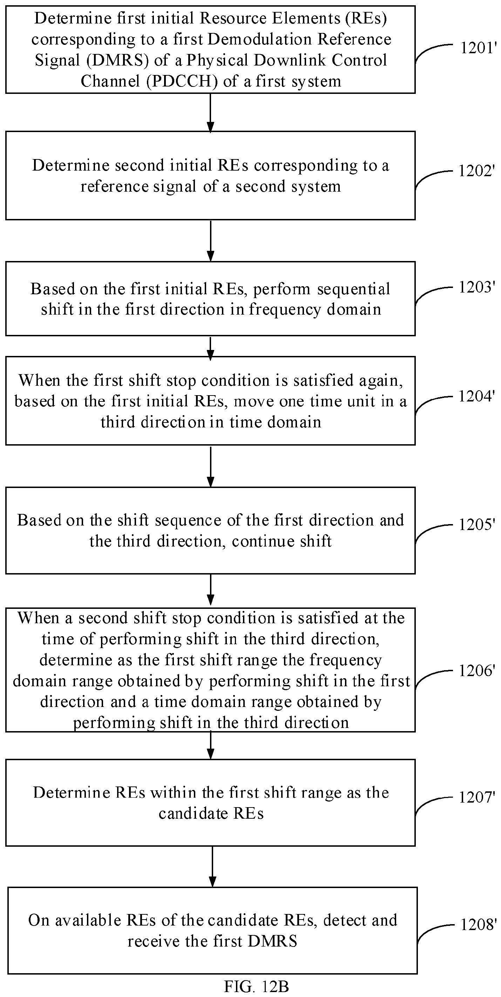

In some embodiments, as shown in FIG. 12B, it is a flowchart illustrating a method for receiving signals according to an example. The method may be executed by a terminal and the method may include the following steps.

At step 1201', first initial Resource Elements (RE) corresponding to a first Demodulation Reference Signal (DMRS) of a Physical Downlink Control Channel (PDCCH) of a first system are determined.

In the embodiments of the present disclosure, the first system may be an NR system, the first DMRS may be any DMRS corresponding to the PDCCH of the NR system, and the terminal may determine the first initial REs based on the above DMRS-related mechanism.

At step 1202', second initial REs corresponding to a reference signal of a second system are determined.

In the embodiments of the present disclosure, the second system may be an LTE system, the reference signal of the second system may be at least one of CRS, PCFICH or PHICH of the LTE, and the terminal may determine the second initial REs based on the above relevant mechanism of CRS, PCFICH and PHICH.

If the reference signal of the second system is PCFICH or PHICH, similar to the CRS, the NR terminal may determine the second initial REs based on the relevant signaling and 36.211 relevant mechanism.

At step 1203', based on the first initial REs, sequential shift is performed in a first direction in frequency domain.

In the embodiments of the present disclosure, the first direction may be a frequency-increasing direction or a frequency-decreasing direction. The first direction may be determined by protocol or indicated by a signaling from the base station, which is not limited herein.

At step 1204', when a first shift stop condition is satisfied, based on the first initial REs, one time unit is moved in a third direction in time domain.

In the embodiments of the present disclosure, the first shift stop condition includes that a number of frequency domain resources corresponding to the shift is equal to a predetermined maximum number of frequency resources.

In one possible implementation, the predetermined maximum number of frequency resources "delta" may be determined based on protocol predefinition, or determined based on a signaling instruction from the base station or determined based on terminal reporting capability, which is not limited herein. In an example, the maximum number of frequency resources "delta" may be 3.

The first direction is a frequency-increasing direction or the first direction is a frequency-decreasing direction. The third direction is a time unit-increasing direction.

At step 1205, in a shift sequence of the first direction and the third direction, shift is continued.

In the embodiments of the present disclosure, the terminal may move one time unit in the third direction in time domain, and then based on the first initial REs, perform sequential shift in the first direction in the frequency domain corresponding to the time unit after the movement until the first shift stop condition is satisfied, and the terminal may continue moving one time unit in the third direction in time domain. The first shift stop condition includes that a number of frequency domain resources corresponding to the shift is equal to the maximum number of frequency domain resources.

Based on the above process, shift is continued based on the mode of shift in frequency domain and then time domain.

At step 1206', when a second shift stop condition is satisfied at the time of performing shift in the third direction, the frequency domain range obtained by performing shift in the first direction and the time domain range obtained by performing shift in the third direction are determined as the first shift range.

In the embodiments of the present disclosure, the second shift stop condition includes that a number of time units corresponding to the shift is equal to a predetermined maximum number of time units.

In one possible implementation, the predetermined maximum number of time units may be determined based on protocol predefinition, or determined based on a signaling instruction from the base station or determined based on terminal reporting capability, which is not limited herein.

In one possible implementation, the maximum number of time units may be a number of time units occupied by the control resource set (CORESET) where the first DMRS is located. It is noted that when the terminal performs shift in the third direction, the number of the time units corresponding to the shift may be less than or equal to the maximum number of time units.

At step 1207', REs within the first shift range are determined as the candidate REs.

At step 1208', on available REs of the candidate REs, the first DMRS is detected and received.

In the embodiments of the present disclosure, the available REs refer to those REs not occupied by another reference signal in the candidate REs. The another reference signal may be any second DMRS different from the first DMRS or the reference signal of the second system. The reference signal of the second system may be at least one of CRS, PCFICH or PHICH of the LTE.

In one possible implementation, the candidate REs include a plurality of available REs, and the terminal may, on the available REs determined in a fourth direction, detect and receive the first DMRS. The fourth direction is a frequency domain shift direction in which a maximum number of the available REs is determined. Furthermore, the terminal may perform shift in the fourth direction based on the first initial REs and on the available REs of the fewest moved REs, detect and receive the first DMRS.

For example, the number of the available REs determined in the first direction may be 1, and the number of the available REs determined in the second direction may be 2, and thus the fourth direction is the second direction. Furthermore, the terminal may perform shift in the second direction based on the first initial REs and on the available REs of the fewest moved REs, detect and receive the first DMRS.

In one possible implementation, the step 1208' may be replaced with the step 1209' (not shown in FIG. 12B).

In the step 1209', when no available REs in the candidate REs are determined, the first DMRS is not received.

In the above embodiments, rate matching may be performed around the reference signal of the LTE system so as to detect and receive the first DMRS on the available REs. If no available REs are present in the candidate REs, the terminal may perform puncturing on the first DMRS, i.e., does not receive the first DMRS. In the DSS scenario, the interference of the reference signal from the LTE system to the DMRS of the NR PDCCH can be effectively avoided while the system capacity of the NR PDCCH can be improved, thereby improving the NR system performance.

In the above embodiments, rate matching may be performed around the reference signal of the LTE system so as to detect and receive the first DMRS on the available REs. If no available REs are present in the candidate REs, the terminal may perform puncturing on the first DMRS, i.e., does not receive the first DMRS. In the DSS scenario, the interference of the reference signal from the LTE system to the DMRS of the NR PDCCH can be effectively avoided while the system capacity of the NR PDCCH can be improved, thereby improving the NR system performance.

In some embodiments, the above maximum number of frequency units "delta" may be greater than or less than 0, and the first direction may be denoted by the positive and negative delta. For example, the delta greater than 0 refers to that the first direction is the frequency-increasing direction, and the delta less than 0 refers to that the first direction is the frequency-decreasing direction.

In some embodiments, the time unit in the third direction may be an OFDM symbol. When the first shift range is determined, the smaller the OFDM index value is, the higher the priority is.

In the above embodiments, the terminal determines the candidate REs by shift and further detects and receives the first DMRS on the available REs of the candidate REs. If no available REs are present in the candidate REs, the terminal does not receive the first DMRS. In addition to the above method, the present disclosure further provides another method for receiving signals.

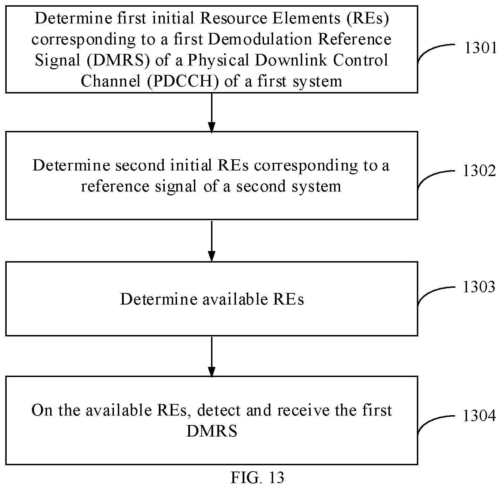

One or more embodiments of the present disclosure provide a method for receiving signals. As shown in FIG. 13, it is a flowchart illustrating a method for receiving signals according to an example. The method may be executed by a terminal and the method may include the following steps.

At step 1301, first initial Resource Elements (RE) where a first Demodulation Reference Signal (DMRS) of a Physical Downlink Control Channel (PDCCH) of a first system is located are determined.

In the embodiments of the present disclosure, the first system may be an NR system, the first DMRS may be any DMRS corresponding to the PDCCH of the NR system, and the terminal may determine the first initial REs based on the above DMRS-related mechanism.

At step 1302, second initial REs where a reference signal of a second system is located are determined.

In the embodiments of the present disclosure, the second system may be an LTE system, the reference signal of the second system may be at least one of CRS, PCFICH and PHICH of the LTE, and the terminal may determine the second initial REs based on the above relevant mechanism of CRS, PCFICH or PHICH.

If the reference signal of the second system is PCFICH or PHICH, similar to the CRS, the NR terminal may determine the second initial REs based on the relevant signaling and 36.211 relevant mechanism.

At step 1303, available REs are determined.

In the embodiments of the present disclosure, resources corresponding to the first initial REs and the second initial REs are same, the available REs are not occupied by another reference signal within a first frequency domain range corresponding to the PDCCH, and the another reference signal includes a second DMRS or the reference signal of the second system.

The first frequency domain range may be a bandwidth part (BWP) frequency domain range where the PDCCH is located or one Resource Block (RB) range within the frequency domain range where the PDCCH is located, or a CORESET frequency domain range corresponding to the PDCCH.

At step 1304, on the available REs, the first DMRS is detected and received.

It is noted that the frequency domain resources corresponding to the PDCCH are formed of a plurality of RBs, and descriptions are made herein with any one RB. On the available REs of the RB, the first DMRS is detected and received.

In the above embodiments, the terminal may directly determine the available REs, detect and receive the first DMRS on the available REs, and perform rate matching around the reference signal of the LTE system. In the DSS scenario, the interference of the reference signal from the LTE system for the DMRS of the NR PDCCH can be effectively avoided while the system capacity of the NR PDCCH can be improved, thereby improving the NR system performance.

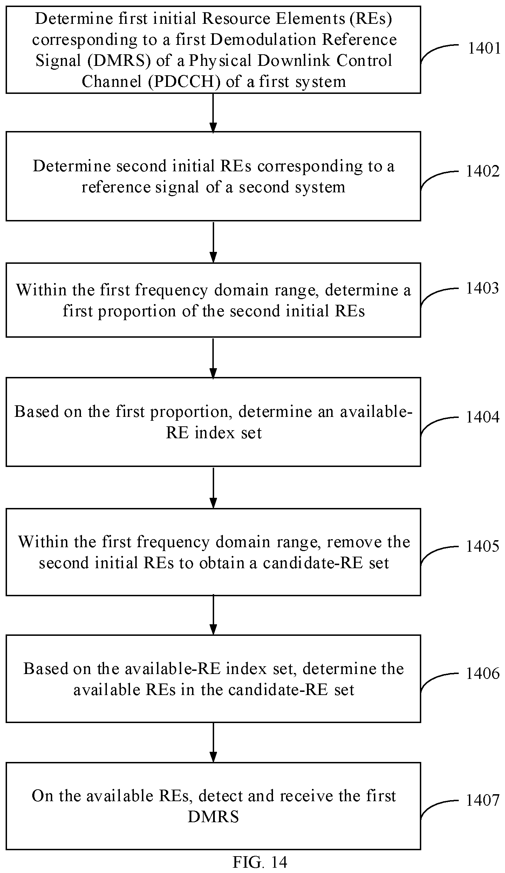

In some optional embodiments, as shown in FIG. 14, it is a flowchart illustrating a method for receiving signals according to an example. The method may be executed by a terminal and the method may include the following steps.

At step 1401, first initial Resource Elements (RE) where a first Demodulation Reference Signal (DMRS) of a Physical Downlink Control Channel (PDCCH) of a first system is located are determined.

In the embodiments of the present disclosure, the first system may be an NR system, the first DMRS may be any DMRS corresponding to the PDCCH of the NR system, and the terminal may determine the first initial REs based on the above DMRS-related mechanism.

At step 1402, second initial REs where a reference signal of a second system is located are determined.

In the embodiments of the present disclosure, the second system may be an LTE system, the reference signal of the second system may be at least one of CRS, PCFICH or PHICH of the LTE, and the terminal may determine the second initial REs based on the above relevant mechanism of CRS, PCFICH and PHICH.

If the reference signal of the second system is PCFICH or PHICH, similar to the CRS, the NR terminal may determine the second initial REs based on the relevant signaling and 36.211 relevant mechanism.

At step 1403, within a first frequency domain range, a first proportion of the second initial REs is determined.

The first frequency domain range may be a bandwidth part (BWP) frequency domain range where the PDCCH is located or one Resource Block (RB) range within the frequency domain range where the PDCCH is located, or a CORESET frequency domain range corresponding to the PDCCH.

It is noted that the frequency domain resources corresponding to the PDCCH are formed of a plurality of RBs, and descriptions are made herein with any one RB. On the available REs of the RB, the first DMRS is detected and received.

In one possible implementation, a ratio of a number of the second initial REs to a total number of REs within the first frequency domain range may be determined to obtain the first proportion.

At step 1404, based on the first proportion, an available-RE index set is determined.

In the embodiments of the present disclosure, there is a preset correspondence between the first proportion and the available-RE index set.

The correspondence between different first proportions $\alpha$ and different available-RE index sets may be predefined by protocol.

The terminal may determine an available-RE index value corresponding to the first proportion based on the above correspondence.

At step 1405, within the first frequency domain range, the second initial REs are removed to obtain a candidate-RE set.

At step 1406, based on the available-RE index set, available REs are determined in the candidate-RE set.

In the embodiments of the present disclosure, each RE in the candidate-RE set may be re-numbered in an ascending order based on a corresponding index, and an index value of each RE in the candidate-RE set is determined. For example, the candidate-RE set is {1, 2, 4, 5, 7, 8, 10, 11} and the re-numbered candidate-RE set is {0, 1, 2, 3, 4, 5, 6, 7}.

Furthermore, the terminal may determine the REs indicated by the available-RE index set in the candidate-RE set, as the available REs. For example, the available-RE indexes are {1, 4, 7}, and the terminal may determine the REs with the indexes {1, 4, 7} in the candidate-RE set, as the available REs.

It is noted that the available-RE indexes indicate the REs obtained by re-numbering each RE in the candidate-RE set based on the index. Taking the available-RE indexes {1, 4, 7} as example, the REs with the un-renumbered indexes {2, 7, 11} (the renumbered indexes are {1, 4, 7}) in the candidate-RE set are determined as the available REs.

At step 1407, on the available REs, the first DMRS is detected and received.

In the above embodiments, the terminal may determine the available REs based on the proportion of the second initial REs within the first frequency domain range. In the DSS scenario, the interference of the reference signal from the LTE system to the DMRS of the NR PDCCH can be effectively avoided while the system capacity of the NR PDCCH can be improved, thereby improving the NR system performance.

A method for sending signals provided by the present disclosure will be described below from a base station side.

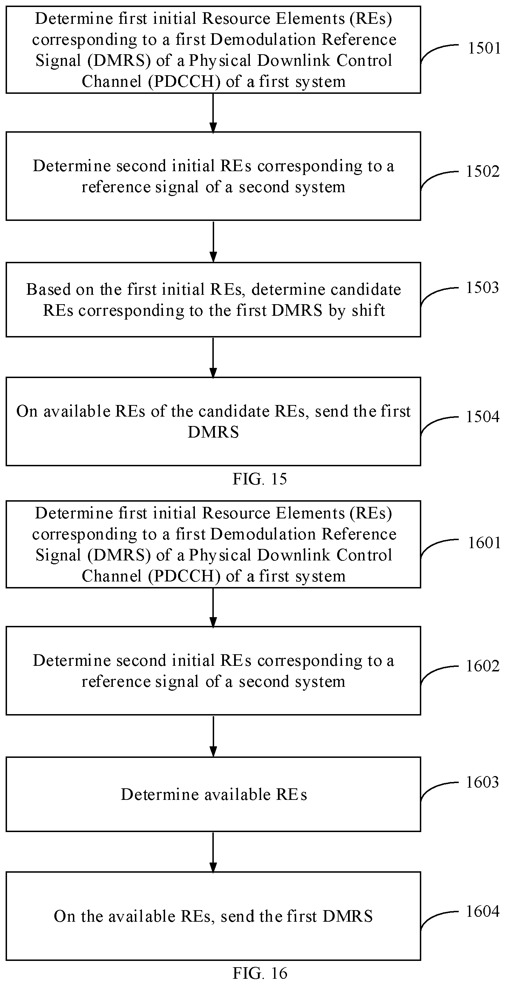

One or more embodiments of the present disclosure provide a method for sending signals. As shown in FIG. 15, it is a flowchart illustrating a method for sending signals according to an example. The method may be executed by a base station and the method may include the following steps.

At step 1501, first initial Resource Elements (RE) where a first Demodulation Reference Signal (DMRS) of a Physical Downlink Control Channel (PDCCH) of a first system is located are determined.

The way that the base station determines the first initial REs is similar to that of the terminal side and will not be described redundantly.

At step 1502, second initial REs where a reference signal of a second system is located are determined.

The way that the base station determines the second initial REs is similar to that of the terminal side and will not be described redundantly.

At step 1503, based on the first initial REs, candidate REs corresponding to the first DMRS are determined by shift.

Resources corresponding to the first initial REs and the second initial REs are same.

At step 1504, on available REs of the candidate REs, the first DMRS is sent.

The available REs are not occupied by another reference signal, and the another reference signal is a second DMRS or the reference signal of the second system.

In the above embodiments, the base station may determine a first shift range by shift, determine REs within the first shift range as the candidate REs, and send the first DMRS on available REs of the candidate REs. In the DSS scenario, the interference of the reference signal from the LTE system to the DMRS of the NR PDCCH can be effectively avoided while the system capacity of the NR PDCCH can be improved, thereby improving the NR system performance.

In some optional embodiments, the base station may firstly determine the first shift range by shift based on the first initial REs, and determine the REs within the first shift range as the candidate REs.

The first shift range may be determined in any one of the following manners:

Manner 1: based on the first initial REs, sequential shift is performed in a first direction in frequency domain; when a first shift stop condition is satisfied, a frequency domain range obtained by performing shift in the first direction is determined as the first shift range.

The specific implementation is similar to the implementation of the embodiment of the terminal side as shown in FIG. 10 and will not be repeated herein.

Manner 2: based on the first initial REs, sequential shift is performed in the first direction in frequency domain; when the first shift stop condition is satisfied, based on the first initial REs, sequential shift is performed in a second direction in frequency domain; when the first shift stop condition is satisfied again, the frequency domain ranges obtained by performing shift in the first direction and the second direction are determined as the first shift range.

The specific implementation is similar to the implementation of the embodiment of the terminal side as shown in FIG. 11 and will not be repeated herein.

Manner 3: based on the first initial REs, sequential shift is performed in the first direction in frequency domain; when the first shift stop condition is satisfied, based on the first initial REs, sequential shift is performed in the second direction in frequency domain; when the first shift stop condition is satisfied again, based on the first initial REs, one time unit is moved in a third direction in time domain; based on a shift sequence of the first direction, the second direction and the third direction, shift is continued; when a second shift stop condition is satisfied at the time of performing shift in the third direction, the frequency domain range obtained by performing shift in the first direction and the second direction and a time domain range obtained by performing shift in the third direction are determined as the first shift range.

The specific implementation is similar to the implementation of the embodiment of the terminal side as shown in FIG. 12A or 12B and will not be repeated herein.

One or more embodiments of the present disclosure provide a method for sending signals. As shown in FIG. 16, it is a flowchart illustrating a method for sending signals according to an example. The method may be executed by a base station and the method may include the following steps.

At step 1601, first initial Resource Elements (RE) where a first Demodulation Reference Signal (DMRS) of a Physical Downlink Control Channel (PDCCH) of a first system is located are determined.

At step 1602, second initial REs where a reference signal of a second system is located are determined.

At step 1603, available REs are determined.

Resources corresponding to the first initial REs and the second initial REs are same, the available REs are not occupied by another reference signal within a first frequency domain range corresponding to the PDCCH, and the another reference signal includes a second DMRS or the reference signal of the second system.

At step 1604, on the available REs, the first DMRS is sent.

The specific implementation is similar to the implementation of the embodiment of the terminal side as shown in FIGS. 13 to 14 and will not be repeated herein.

In the above embodiment, the base station may directly determine the available REs based on a first proportion of the second initial REs within a first shift range, and send the first DMRS on the available REs. In the DSS scenario, the interference of the reference signal from the LTE system to the DMRS of the NR PDCCH can be effectively avoided while the system capacity of the NR PDCCH can be improved, thereby improving the NR system performance.

In order to help understand the above methods provided by the present disclosure, the above methods for receiving signals and for sending signals will be further illustrated by way of examples below.

Embodiment 1: it is supposed that the NR system and the LTE system carry out transmission on a same frequency band. At this time, an LTE CRS is continuously sent. Further, an LTE PHICH and PCFICH can also be transmitted. Hereunder, an LTE RS represents one or more of an LTE CRS, PHICH, PCFICH or other LTE transmission signals, which will not be redundantly described.

In the embodiment, the base station transmits NR PDCCH and corresponding modulation-demodulation signal DMRS on the OFDM symbols where an LTE RS is located, and the LTE RS has an intersection in frequency domain with the NR PDCCH. Further, the time frequency domain position of the LTE RS is notified to the terminal by the base station through Resource Control (RRC) Signaling, or the terminal determines the position in another way. The schematic diagrams in the embodiments are made with Physical Cell Identifier (PCI) being 0 as example, so as to illustrate the specific solutions of the present disclosure.

In this embodiment, the first parameter value "delta" may be configured by signaling or determined by predefinition, or determined by terminal reporting capability. Illustratively, delta=3, or delta=-3, where the parameter value delta is an integer which may be greater than or less than 0. The delta greater than or less than 0 may be associated with the direction of frequency domain shift. For example, delta>0 corresponds to that the first direction is a frequency-increasing direction and delta<0 corresponds to that the first direction is a frequency-decreasing direction.

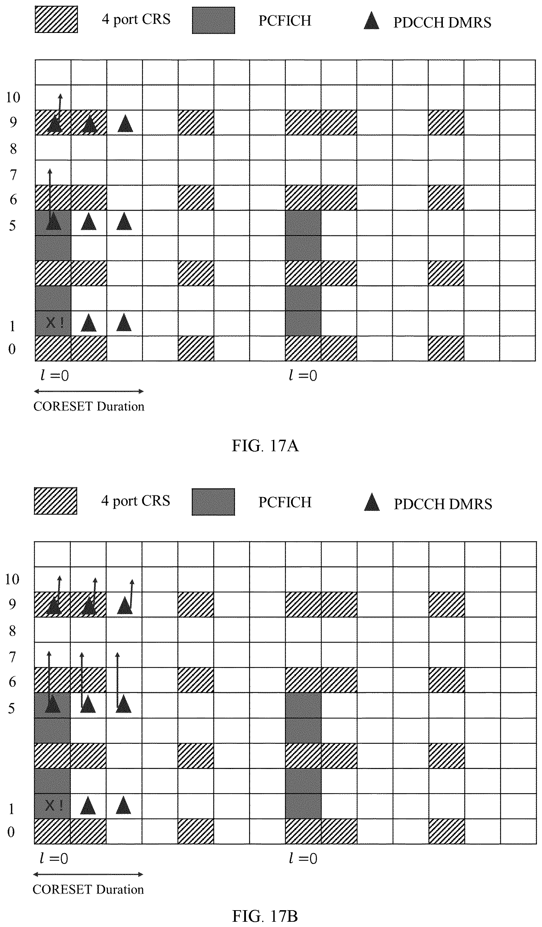

In one possible implementation, when the NR PDCCH DMRS is in conflict with the LTE RS RE, that is, the first initial REs and the second initial REs correspond to the same resources, shift is performed in frequency domain based on the first initial REs until the first DMRS has no conflict with the LTE RS. In this way, shift may be performed in the frequency-increasing direction. After the shift reaches delta (or |delta|) REs, if there is still a conflict with the LTE RS/another NR PDCCH DMRS, puncturing is performed on the first DMRS, that is, the terminal side does not receive the first DMRS and the base station does not send the first DMRS, as shown in FIG. 17A.

In one possible implementation, when the first DMRS is in conflict with the reference signal of the second system, that is, the first initial REs and the second initial REs correspond to the same resources, shift is performed in frequency domain based on the first initial REs until there is no conflict with the LTE RS. In this way, shift may be performed in the frequency-decreasing direction. After the shift reaches delta (or |delta|) REs, if there is still a conflict with the LTE RS/another NR PDCCH DMRS, puncturing is performed on the first DMRS, that is, the terminal side does not receive the first DMRS and the base station does not send the first DMRS.

In one possible implementation, when the first DMRS is in conflict with the reference signal of the second system, that is, the first initial REs and the second initial REs correspond to the same resources, shift is performed in the frequency-increasing direction in frequency domain based on the first initial REs until there is no conflict with the LTE RS. After the shift reaches delta (or |delta|) REs, if there is still a conflict with the LTE RS/the second DMRS, shift is performed in the frequency-decreasing direction based on the first initial REs until there is no conflict with the LTE RS. After the shift has delta (or |delta|) REs, if there is still a conflict with the LTE RS/another NR PDCCH DMRS, puncturing is performed on the first DMRS.

In one possible implementation, in order to guarantee joint channel estimation of the DMRS on the time domain, within the OFDM symbol range occupied by the PDCCH CORESET, the RE indexes corresponding to the DMRS transmission are same, that is, for the DMRS which has the same first initial RE indexes as those corresponding to the first DMRS, the same shift operation is performed in frequency domain, as shown in FIG. 17B.

It is noted that in the present disclosure, the first initial RE position corresponding to the first DMRS refers to the time frequency domain position determined based on current protocol and no redundant descriptions are made herein.

Determining a way of performing shift in frequency domain for the NR DMRS by defining the parameter "delta" guarantees that when NR PDCCH is sent on the LTE CRS symbol, lost of useful information will be avoided, ensuring the decoding performance of the PDCCH. Further, since the DMRS is mainly used for channel estimation within a given RE range, if it is determined that there is no condition for PDCCH transmission within the frequency domain range, the first DMRS may be discarded.

In the embodiment 1, the frequency domain range determined by performing shift in the first direction is determined as the first shift range, and the REs within the first shift range are determined as the candidate REs and then the terminal side detects and receives the first DMRS on the available REs of the candidate REs, and the base station side sends the first DMRS on the available REs of the candidate REs. That is, whether the available REs are present will not be detected before the first shift range is determined.

In the above embodiments, the PDCCH DMRS transmission waste is avoided while the PDCCH performance is guaranteed.

Embodiment 2: it is supposed that the NR system and the LTE system carry out transmission on a same frequency band. At this time, the LTE CRS is to be continuously sent. Further, an LTE PHICH/PCFICH can also be transmitted. Hereunder, an LTE RS represents one or more of an LTE CRS, PHICH, PCFICH or other LTE transmission signals, which will not be redundantly described.

In this embodiment, the base station transmits a NR PDCCH and a corresponding modulation-demodulation signal DMRS on the OFDM symbols with an LTE RS, and the LTE RS has an intersection in frequency domain with the NR PDCCH. Further, the time frequency domain position of the LTE RS is notified to the terminal by the base station through RRC Signaling, or the terminal determines the position in another way. The schematic diagrams in the embodiments are made with PCI being 0 as example, so as to illustrate the specific solutions of the present disclosure.

Based on the parameter "delta" determined in the embodiment 1, if the first DMRS is in conflict with the reference signal of the second system, the time frequency domain position of the DMRS transmission may also be determined in the order of frequency domain and then time domain.

One possible implementation includes the following steps:

At step 1, shift may be performed in frequency domain based on the first initial REs. The frequency domain shift may be performed toward high RE index or toward low RE index or firstly in the frequency-increasing direction, and after the shift reaches delta REs, if the REs in no conflict with the LTE RS or another DMRS RE are still not determined, then in the frequency-decreasing direction. The specific implementation is same as the embodiment 1 and will not be repeated herein.

At step 2, based on the first initial REs, one time unit is moved in the third direction in time domain. The third direction is a time unit-increasing direction.

At step 3, based on the shift sequence of the first direction, the second direction and the third direction, shift is continued.

In one possible implementation, for different DMRS corresponding to the same terminal, the above DMRS conflict processing mechanism is performed one by one based on the sequence of from low to high for frequency domain RE indexes and from low to high for time domain OFDM symbol indexes. For one RE, the priority of the DMRS transmitted at this position is associated with the conflict processing sequence.

By the above manner, the first shift range may be determined, and all REs within the first shift range are determined as the candidate REs, and then the available REs are determined in the candidate REs. The terminal side detects and receives the first DMRS on the available REs and the base station side sends the first DMRS on the available REs.

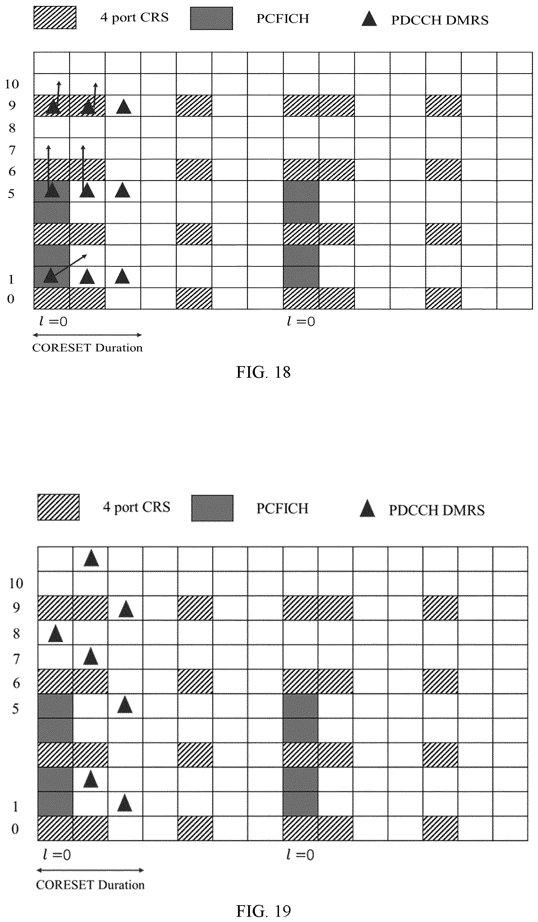

Illustratively, one possible implementation scenario is as shown in FIG. 18.

Determining the way of performing frequency domain shift and time domain shift for the NR DMRS by defining the parameter "delta" guarantees that when NR PDCCH is sent on the LTE CRS symbol, lost of useful information will be avoided, ensuring the decoding performance of the PDCCH. Further, since the first DMRS is mainly used for channel estimation within a given RE range, if it is determined that there is no condition for PDCCH transmission within the frequency domain range, the first DMRS may be discarded. In the above embodiments, the PDCCH DMRS transmission waste is also avoided while the PDCCH performance is guaranteed.

It is further noted that whether the available REs are present may also be determined during the process of determining the first shift range, and once the available REs are determined, the determination for the first shift range may be discontinued and the first DMRS is received or sent on the available REs.

Embodiment 3: it is supposed that the NR system and the LTE system carry out transmission on a same frequency band. At this time, the LTE CRS is to be continuously sent. Further, LTE PHICH and PCFICH can also be transmitted. Hereunder, LTE RS represents one or more of LTE CRS, PHICH, PCFICH or other LTE transmission signals, which will not be redundantly described.

In this embodiment, the base station transmits NR PDCCH and corresponding modulation-demodulation signal DMRS on the OFDM symbols with LTE RS, and the LTE RS has an intersection in frequency domain with the NR PDCCH. Further, the time frequency domain position of the LTE RS is notified to the terminal by the base station through RRC, or the terminal determines the position in another way. The schematic diagrams in the embodiments are made with PCI being 0 as example, so as to illustrate the specific solutions of the present disclosure.

In this embodiment, based on the proportion of the REs occupied for LTE RS transmission in the whole RB, i.e., on the first proportion of the second initial REs within the first frequency domain range, the available REs are determined. The first proportion is related to an overhead factor $\alpha$ and different available-RE index sets are defined flexibly. The available-RE index set may be determined based on predefinition or determined by signaling instruction, which is not limited herein.

The LTE RS overhead factor $\alpha$ is determined, and the factor $\alpha$ (first proportion) is related to different available-RE index sets. The DMRS index defined by DMRS pattern is the remaining RE definition other than the RE indexes occupied by LTE RS. Illustratively, the correspondence between the factor $\alpha$ and the available-RE index set is as shown in Table 1, and the corresponding way of determining the available REs is as shown in FIG. 19.

Table 1

| First proportion$\alpha$ | 0 | 1/6 | 1/3 | 1/2 | 2/3 | 5/6 | 1 |
|---|---|---|---|---|---|---|---|
| Available-RE | {1, 5, 9} | {1, 5, 9} | {1, 4, 7} | {1, 4} | {1} | {1} | null |
| index set | | | | | | | |

Illustratively, the association relationship between the first proportion and the available-RE index set is also as shown in Table 2.

Table 2

| First proportion$\alpha$ | 0 | 1/6 | 1/3 | 1/2 | 2/3 | 5/6 | 1 |
|---|---|---|---|---|---|---|---|
| Available-RE index set | {1, 5, 9} | {1, 5, 9} | {1, 4, 7} | {1, 4} | {1, 3} | {1} | null |

It is noted that Tables 1 and 2 show the correspondence between the first proportion and the available-RE index set by way of example, and other specific contents showing the correspondence between them also fall within the scope of protection of the present disclosure.

The first proportion $\alpha$ is 1, which means all REs within one RB are all occupied by the reference signal. At this time, there is no position for DMRS transmission. Therefore, the available-RE index set at this time is null.

Furthermore, the above correspondence may also be determined by signaling instruction, which is not repeated herein.

With 2-port CRS as example, on symbol 0, CRS is transmitted on 0 and 6 in one configuration, and the corresponding overhead factor is equal to 2/12=1/6. The REs for transmitting the DMRS may be {1, 2, 3, 4, 5, 7, 8, 9, 10, 11} which is renumbered as {0, 1, 2, 3, 4, 5, 6, 7, 8, 9}. Thus, the corresponding DMRS can be transmitted on the REs with the index 1, 5, 9, and the REs with the index 1, 5, 9 within the corresponding RB range are REs with the index 2, 7, 11.

In the embodiment 3, a way similar to rate matching is adopted. The available-RE index set is redefined such that the conflict with LTE RS can be effectively avoided while the channel estimation performance is improved, thus improving the PDCCH transmission performance.

Corresponding to the above embodiments of the application function implementation methods, the present disclosure further provides an embodiment of an application function implementation apparatus.

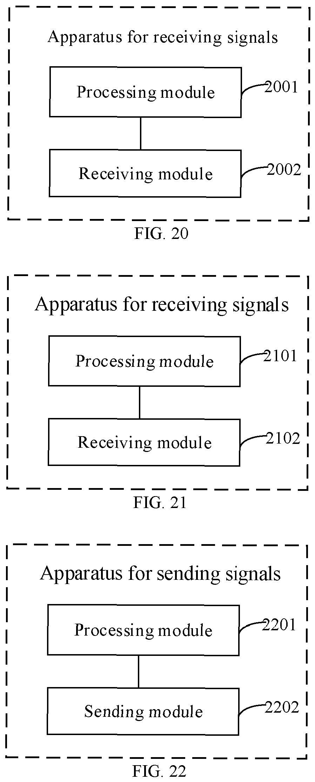

As shown in FIG. 20, it is a block diagram illustrating an apparatus for receiving signals according to an example. The apparatus includes:

a processing module 2001, configured to determine first initial Resource Elements (REs) corresponding to a first Demodulation Reference Signal (DMRS) of a Physical Downlink Control Channel (PDCCH) of a first system;
the processing module 2001 being further configured to determine second initial REs corresponding to a reference signal of a second system;
the processing module 2001 being further configured to determine candidate REs corresponding to the first DMRS by shift based on the first initial REs; where resources corresponding to the first initial REs and the second initial REs are same; and
a receiving module 2002, configured to detect and receive the first DMRS on available REs of the candidate REs; where the available REs are unoccupied by another reference signal, and the another reference signal is a second DMRS or the reference signal of the second system.

As shown in FIG. 21, it is a block diagram illustrating an apparatus for receiving signals according to an example. The apparatus includes:

a processing module 2101, configured to determine first initial Resource Elements (REs) where a first Demodulation Reference Signal (DMRS) of a Physical Downlink Control Channel (PDCCH) of a first system is located;
the processing module 2101 being further configured to determine second initial REs where a reference signal of a second system is located;

the processing module 2101 being further configured to determine available REs; where resources corresponding to the first initial REs and the second initial REs are same, the available REs are unoccupied by another reference signal within a first frequency domain range corresponding to the PDCCH, and the another reference signal includes a second DMRS or the reference signal of the second system; and

a receiving module 2102, configured to detect and receive the first DMRS on the available REs.

As shown in FIG. 22, it is a block diagram illustrating an apparatus for sending signals according to an example. The apparatus includes:

a processing module 2201, configured to determine first initial Resource Elements (REs) where a first Demodulation Reference Signal (DMRS) of a Physical Downlink Control Channel (PDCCH) of a first system is located;
the processing module 2201 being further configured to determine second initial REs where a reference signal of a second system is located;
the processing module 2201 being further configured to determine candidate REs corresponding to the first DMRS by shift based on the first initial REs; where resources corresponding to the first initial REs and the second initial REs are same; and
a sending module 2202, configured to send the first DMRS on available REs of the candidate REs; where the available REs are unoccupied by another reference signal, and the another reference signal is a second DMRS or the reference signal of the second system.

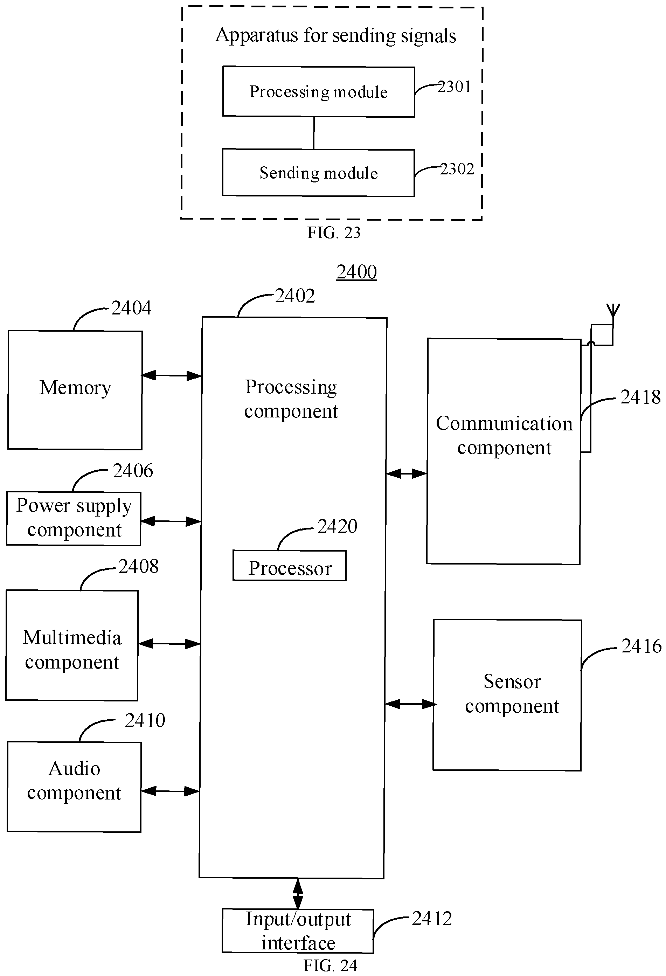

As shown in FIG. 23, it is a block diagram illustrating an apparatus for sending signals according to an example. The apparatus includes:

a processing module 2301, configured to determine first initial Resource Elements (REs) where a first Demodulation Reference Signal (DMRS) of a Physical Downlink Control Channel (PDCCH) of a first system is located;
the processing module 2301 being further configured to determine second initial REs where a reference signal of a second system is located;
the processing module 2301 being further configured to determine available REs; where resources corresponding to the first initial REs and the second initial REs are same, the available REs are unoccupied by another reference signal within a first frequency domain range corresponding to the PDCCH, and the another reference signal includes a second DMRS or the reference signal of the second system; and
a sending module 2302, configured to sending the first DMRS on the available REs.

Since the apparatus embodiments substantially correspond to the method embodiments, a reference may be made to part of the descriptions of the method embodiments for the related part. The apparatus embodiments described above are merely illustrative, where the units described as separate members may be or not be physically separated, and the members displayed as units may be or not be physical units, i.e., may be located in one place, or may be distributed to a plurality of network units. Part or all of the modules may be selected according to actual requirements to implement the objectives of the solutions in the embodiments. Those of ordinary skill in the art may understand and carry out them without creative work.

Correspondingly, the present disclosure further provides a computer readable storage medium, storing computer programs, where the computer programs are used to implement any one of the above method for receiving signals.

Correspondingly, the present disclosure further provides a computer readable storage medium, storing computer programs, where the computer programs are used to implement any one of the above method for sending signals.

Correspondingly, the present disclosure further provides an apparatus for receiving signals, which includes:

a processor;
a memory storing processor-executable instructions;
where the processor is configured to perform any one of the above method for receiving signals.

FIG. 24 is a block diagram illustrating an apparatus for receiving signals 2400 according to an example of the present disclosure. For example, the apparatus 2400 may be a smart phone, a tablet computer, an electronic book reader, a multimedia player, a wearable device, a vehicle-mounted user device, an ipad and a smart TV and the like.

As shown in FIG. 24, the apparatus 2400 may include one or more of the following components: a processing component 2402, a memory 2404, a power supply component 2406, a multimedia component 2408, an audio component 2410, an input/output (I/O) interface 2412, a sensor component 2416 and a communication component 2418.

The processing component 2402 generally controls overall operations of the apparatus 2400, such as operations associated with display, phone calls, data random access, camera operations, and recording operations. The processing component 2402 may include one or more processors 2420 to execute instructions to complete all or part of the steps of the above method for receiving signals. In addition, the processing component 2402 may include one or more modules which facilitate the interaction between the processing component 2402 and other components. For example, the processing component 2402 may include a multimedia module to facilitate the interaction between the multimedia component 2408 and the processing component 2402. For another example, the processing component 2402 may read executable instructions from the memory to perform the steps of the method for receiving signals of each embodiment as above.

The memory 2404 is configured to store various types of data to support the operation of the apparatus 2400. Examples of such data include instructions for any application or method operated on the apparatus 2400, contact data, phonebook data, messages, pictures, videos, and so on. The memory 2404 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or compact disk.

The power supply component 2406 supplies power for different components of the apparatus 2400. The power supply component 2406 may include a power supply management system, one or more power supplies, and other components associated with generating, managing and distributing power for the apparatus 2400.

The multimedia component 2408 includes a screen that provides an output interface between the apparatus 2400 and a user. In some examples, the multimedia component 2408 includes a front camera and/or a rear camera. When the apparatus 2400 is in an operation mode, such as a shooting mode or a video mode, the front camera and/or the rear camera may receive external multimedia data. Each of the front and rear cameras may be a fixed optical lens system or have a focal length and an optical zoom capability.

The audio component 2410 is configured to output and/or input audio signals. For example, the audio component 2410 includes a microphone (MIC) configured to receive an external audio signal when the apparatus 2400 is in an operation mode, such as a call mode, a recording mode, and a voice recognition mode. The received audio signal may be further stored in the memory 2404 or transmitted via the communication component 2418. In some examples, the audio component 2410 also includes a loudspeaker for outputting an audio signal.

The I/O interface 2412 provides an interface between the processing component 2402 and a peripheral interface module which may be a keyboard, a click wheel, a button, or the like. These buttons may include, but are not limited to a home button, a volume button, a start button, and a lock button.

The sensor component 2416 includes one or more sensors for providing a status assessment in various aspects to the apparatus 2400. For example, the sensor component 2416 may detect an open/closed state of the apparatus 2400, and the relative positioning of components, for example, the component is a display and a keypad of the apparatus 2400. The sensor component 2416 may also detect a change in position of the apparatus 2400 or a component of the apparatus 2400, the presence or absence of a user in contact with the apparatus 2400, the orientation or acceleration/deceleration of the apparatus 2400 and a change in temperature of the apparatus 2400. The sensor component 2416 may include a proximity sensor configured to detect the presence of nearby objects without any physical contact. The sensor component 2416 may also include a light sensor, such as a CMOS or CCD image sensor, for use in imaging applications. In some examples, the sensor component 2416 may also include an acceleration sensor, a gyro sensor, a magnetic sensor, a pressure sensor, or a temperature sensor.

The communication component 2418 is configured to facilitate wired or wireless communication between the apparatus 2400 and other devices. The apparatus 2400 may access a wireless network based on a communication standard, such as WiFi, 2G, 3G, 4G, 5G or 6G or a combination thereof. In an example, the communication component 2418 receives broadcast signals or broadcast associated information from an external broadcast management system via a broadcast channel. In an example, the communication component 2418 also includes a near field communication (NFC) module to facilitate short range communication. For example, the NFC module may be implemented based on a radio frequency identification (RFID) technology, an infrared data association (IrDA) technology, an ultrawideband (UWB) technology, a Bluetooth (BT) technology, and other technologies.

In an example, the apparatus 2400 may be implemented by one or more of an application specific integrated circuit (ASIC), a digital signal processor (DSP), a digital signal processing device (DSPD), a programmable logic device (PLD), a field programmable gate array (FPGA), a controller, a microcontroller, a microprocessor or other electronic elements for performing any one of the method for receiving signals at the terminal side.

In an example, there is further provided a non-transitory machine readable storage medium including instructions, for example, the memory 2404 including instructions. The above instructions may be executed by the processor 2420 of the apparatus 2400 to perform the above method for receiving signals. For example, the non-transitory machine readable storage medium may be a Read Only Memory (ROM), a Random Access Memory (RAM), a CD-ROM, a magnetic tape, a floppy disk, and an optical data storage device and the like.

Correspondingly, the present disclosure further provides an apparatus for sending signals, which includes:

a processor;
a memory storing processor-executable instructions;
where the processor is configured to perform any one of the above method for sending signals.

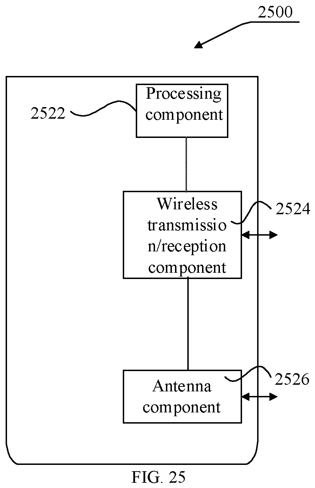

As shown in FIG. 25, it is a structural schematic diagram illustrating an apparatus for sending signals 2500 according to an example. The apparatus 2500 may be provided as a base station. As shown in FIG. 25, the apparatus 2500 includes a processing component 2522, a wireless transmission/reception component 2524, an antenna component 2526, and a signal processing part specific to wireless interface. The processing component 2522 may further include at least one processor.

One processor of the processing component 2522 may be configured to perform any one of the above method for sending signals.

Other implementations of the present disclosure will be apparent to those skilled in the art from consideration of the specification and practice of the present disclosure herein. The present disclosure is intended to cover any variations, uses, modification or adaptations of the present disclosure that follow the general principles thereof and include common knowledge or conventional technical means in the related art that are not disclosed in the present disclosure. The specification and examples are considered as exemplary only, with a true scope and spirit of the present disclosure indicated by the following claims.

It is to be understood that the present disclosure is not limited to the precise structure described above and shown in the accompanying drawings, and that various modifications and changes may be made without departing from the scope thereof. The scope of the present disclosure is limited only by the appended claims.

**Claims**

1. A method for receiving signals, performed by a terminal, comprising:

   determining first initial Resource Elements, REs, corresponding to a first Demodulation Reference Signal, DMRS, of a Physical Downlink Control Channel, PDCCH, of a first system;
   determining second initial REs corresponding to a reference signal of a second system;
   determining candidate REs corresponding to the first DMRS by shift based on the first initial REs; wherein resources corresponding to the first initial REs and the second initial REs are same; and
   detecting and receiving the first DMRS on available REs of the candidate REs;

   wherein the available REs are unoccupied by another reference signal, and the another reference signal is a second DMRS or the reference signal of the second system.

2. The method of claim 1, wherein determining the candidate REs corresponding to the first DMRS by shift based on the first initial REs comprises:

   determining a first shift range by shift based on the first initial REs; and
   determining REs within the first shift range as the candidate REs.

3. The method of claim 2, wherein determining the first shift range by shift based on the first initial REs comprises:

   performing sequential shift in a first direction in frequency domain based on the first initial REs; and
   satisfying a first shift stop condition, then determining, as the first shift range, a frequency domain range obtained by performing shift in the first direction.

4. The method of claim 2, wherein determining the first shift range based on the first initial REs comprises:

   performing sequential shift in a first direction in frequency domain based on the first initial REs;
   satisfying a first shift stop condition, then performing sequential shift in a second direction in frequency domain based on the first initial REs; and
   satisfying the first shift stop condition again, then determining, as the first shift range, a frequency domain range obtained by performing the shift in the first direction and the second direction.

5. The method of claim 2, wherein determining the first shift range based on the first initial REs comprises:

performing sequential shift in a first direction in frequency domain based on the first initial REs;
satisfying a first shift stop condition, then performing sequential shift in a second direction in frequency domain based on the first initial REs;
satisfying the first shift stop condition again, then shifting one time unit in a third direction in time domain based on the first initial REs;
continuing shift based on a shift sequence of the first direction, the second direction and the third direction; and
satisfying a second shift stop condition in case of performing the shift in the third direction, then determining, as the first shift range, a frequency domain range obtained by performing the shift in the first direction and the second direction and a time domain range obtained by performing the shift in the third direction.

6.  The method of any one of claims 3 to 5, wherein the first direction is any one of:

    a frequency-increasing direction, or
    a frequency-decreasing direction.

7.  The method of claim 4 or 5, wherein,

    the first direction is a frequency-increasing direction and the second direction is a frequency-decreasing direction; or,
    the first direction is the frequency-decreasing direction and the second direction is the frequency-increasing direction.

8.  The method of claim 5, wherein the third direction is a time unit-increasing direction.

9.  The method of any one of claims 3 to 5, wherein the first shift stop condition comprises that a number of frequency domain resources corresponding to the shift is equal to a predetermined maximum number of frequency units;
    the second shift stop condition comprises that a number of time units corresponding to the shift is equal to a predetermined maximum number of time units.

10. The method of claim 4 or 5, wherein detecting and receiving the first DMRS on the available REs of the candidate REs, comprises:
    detecting and receiving the first DMRS on the available REs determined in a fourth direction; wherein the fourth direction is a shift direction which is determined from the first direction and the second direction and in which there is a maximum number of the available REs.

11. The method of claim 1, further comprising:
    determining that no available RE exists in the candidate REs, then not receiving the first DMRS.

12. A method for receiving signals, performed by a terminal, comprising:

    determining first initial Resource Elements, REs, where a first Demodulation Reference Signal, DMRS, of a Physical Downlink Control Channel, PDCCH, of a first system is located;
    determining second initial REs where a reference signal of a second system is located;
    determining available REs; wherein resources corresponding to the first initial REs and the second initial REs are same, the available REs are unoccupied by another reference signal within a first frequency domain range corresponding to the PDCCH, and the another reference signal comprises a second DMRS or the reference signal of the second system; and
    detecting and receiving the first DMRS on the available REs.

13. The method of claim 12, wherein determining the available REs comprises:

    determining a first proportion of the second initial REs within the first frequency domain range;
    determining an available-RE index set based on the first proportion; wherein there is a preset correspondence between the first proportion and the available-RE index set;
    removing the second initial REs within the first frequency domain range to obtain a candidate-RE set; and
    determining the available REs in the candidate-RE set based on the available-RE index set.

14. The method of claim 13, wherein determining the first proportion of the second initial REs within the first frequency domain range, comprises:
determining a ratio of a number of the second initial REs within the first frequency domain range to a total number of REs within the first frequency domain range to obtain the first proportion.

15. The method of claim 13, wherein determining the available REs in the candidate-RE set based on the available-RE index set comprises:

re-numbering each RE in the candidate-RE set in an ascending order based on a corresponding index, and determining an index value of each RE in the candidate-RE set; and
determining REs indicated by the available-RE index set in the candidate-RE set, as the available REs.

16. A method for sending signals, performed by a base station, comprising:

determining first initial Resource Elements, REs, where a first Demodulation Reference Signal, DMRS, of a Physical Downlink Control Channel, PDCCH, of a first system is located;
determining second initial REs where a reference signal of a second system is located;
determining candidate REs corresponding to the first DMRS by shift based on the first initial REs; wherein resources corresponding to the first initial REs and the second initial REs are same; and
sending the first DMRS on available REs of the candidate REs; wherein the available REs are unoccupied by another reference signal, and the another reference signal is a second DMRS or the reference signal of the second system.

17. The method of claim 16, wherein determining the candidate REs corresponding to the first DMRS by shift based on the first initial REs comprises:

determining a first shift range by shift based on the first initial REs; and
determining REs within the first shift range as the candidate REs.

18. The method of claim 17, wherein determining the first shift range by shift based on the first initial REs comprises:

performing sequential shift in a first direction in frequency domain based on the first initial REs; and
satisfying a first shift stop condition, then determining, as the first shift range, a frequency domain range obtained by performing shift in the first direction.

19. The method of claim 17, wherein determining the first shift range by shift based on the first initial REs, comprises:

performing sequential shift in a first direction in frequency domain based on the first initial REs;
satisfying a first shift stop condition, then performing sequential shift in a second direction in frequency domain based on the first initial REs; and
satisfying the first shift stop condition again, then determining, as the first shift range, a frequency domain range obtained by performing the shift in the first direction and the second direction.

20. The method of claim 17, wherein determining the first shift range by shift based on the first initial REs, comprises:

performing sequential shift in a first direction in frequency domain based on the first initial REs;
satisfying a first shift stop condition, then performing sequential shift in a second direction in frequency domain based on the first initial REs;
satisfying the first shift stop condition again, then shifting one time unit in a third direction in time domain based on the first initial REs;
continuing shift based on a shift sequence of the first direction, the second direction and the third direction; and
satisfying a second shift stop condition in case of performing the shift in the third direction, then determining, as the first shift range, a frequency domain range obtained by performing the shift in the first direction and the second direction and a time domain range obtained by performing the shift in the third direction.

21. The method of any one of claims 18 to 20, wherein the first direction is any one of:

a frequency-increasing direction; or
a frequency-decreasing direction.

22. The method of claim 19 or 20, wherein,

the first direction is a frequency-increasing direction and the second direction is a frequency-decreasing direction; or,
the first direction is the frequency-decreasing direction and the second direction is the frequency-increasing direction.

23. The method of claim 20, wherein the third direction is a time unit-increasing direction.

24. The method of any one of claims 18 to 20, wherein the first shift stop condition comprises that a number of frequency domain resources corresponding to the shift is equal to a predetermined maximum number of frequency units; the second shift stop condition comprises that a number of time units corresponding to the shift is equal to a predetermined maximum number of time units.

25. The method of claim 19 or 20, wherein sending the first DMRS on the available REs of the candidate REs comprises: sending the first DMRS on the available REs determined in a fourth direction; wherein the fourth direction is a shift direction which is determined from the first direction and the second direction and in which there is a maximum number of the available REs.

26. The method of claim 16, further comprising:
determining that no available RE exists in the candidate REs, then not sending the first DMRS.

27. A method for sending signals, performed by a base station, comprising:

determining first initial Resource Elements, REs, where a first Demodulation Reference Signal, DMRS, of a Physical Downlink Control Channel, PDCCH, of a first system is located;
determining second initial REs where a reference signal of a second system is located;
determining available REs; wherein resources corresponding to the first initial REs and the second initial REs are same, the available REs are unoccupied by another reference signal within a first frequency domain range corresponding to the PDCCH, and the another reference signal comprises a second DMRS or the reference signal of the second system; and
sending the first DMRS on the available REs.

28. The method of claim 27, wherein determining the available REs comprises:

determining a first proportion of the second initial REs within the first frequency domain range;
determining an available-RE index set based on the first proportion; wherein there is a preset correspondence between the first proportion and the available-RE index set;
removing the second initial REs within the first frequency domain range to obtain a candidate-RE set; and
determining the available REs in the candidate-RE set based on the available-RE index set.

29. The method of claim 28, wherein determining the first proportion of the second initial REs within the first frequency domain range comprises:
determining a ratio of a number of the second initial REs within the first frequency domain range to a total number of REs within the first frequency domain range to obtain the first proportion.

30. The method of claim 28, wherein determining the available REs in the candidate-RE set based on the available-RE index set comprises:

re-numbering each RE in the candidate-RE set in an ascending order based on a corresponding index, and determining an index value of each RE in the candidate-RE set; and
determining REs indicated by the available-RE index set in the candidate-RE set, as the available REs.

31. An apparatus for receiving signals, comprising:

a processing module, configured to determine first initial Resource Elements, REs, corresponding to a first Demodulation Reference Signal, DMRS, of a Physical Downlink Control Channel, PDCCH, of a first system;
the processing module being further configured to determine second initial REs corresponding to a reference signal of a second system;

the processing module being further configured to, determine candidate REs corresponding to the first DMRS by shift based on the first initial REs; wherein resources corresponding to the first initial REs and the second initial REs are same; and

a receiving module, configured to detect and receive the first DMRS, on available REs of the candidate REs; wherein the available REs are unoccupied by another reference signal, and the another reference signal is a second DMRS or the reference signal of the second system.

32. An apparatus for receiving signals, comprising:

a processing module, configured to determine first initial Resource Elements, REs, where a first Demodulation Reference Signal, DMRS, of a Physical Downlink Control Channel, PDCCH, of a first system is located;

the processing module being further configured to determine second initial REs where a reference signal of a second system is located;

the processing module being further configured to determine available REs; wherein resources corresponding to the first initial REs and the second initial REs are same, the available REs are unoccupied by another reference signal within a first frequency domain range corresponding to the PDCCH, and the another reference signal comprises a second DMRS or the reference signal of the second system; and

a receiving module, configured to detect and receive the first DMRS on the available REs.

33. An apparatus for sending signals, comprising:

a processing module, configured to determine first initial Resource Elements, REs, where a first Demodulation Reference Signal, DMRS, of a Physical Downlink Control Channel, PDCCH, of a first system is located;

the processing module being further configured to determine second initial REs where a reference signal of a second system is located;

the processing module being further configured to determine candidate REs corresponding to the first DMRS by shift based on the first initial REs; wherein resources corresponding to the first initial REs and the second initial REs are same; and

a sending module, configured to send the first DMRS on available REs of the candidate REs; wherein the available REs are unoccupied by another reference signal, and the another reference signal is a second DMRS or the reference signal of the second system.

34. An apparatus for sending signals, comprising:

a processing module, configured to determine first initial Resource Elements, REs, where a first Demodulation Reference Signal, DMRS, of a Physical Downlink Control Channel, PDCCH, of a first system is located;

the processing module being further configured to determine second initial REs where a reference signal of a second system is located;

the processing module being further configured to determine available REs; wherein resources corresponding to the first initial REs and the second initial REs are same, the available REs are unoccupied by another reference signal within a first frequency domain range corresponding to the PDCCH, and the another reference signal comprises a second DMRS or the reference signal of the second system; and

a sending module, configured to sending the first DMRS on the available REs.

35. A computer readable storage medium, wherein the storage medium stores computer programs and the computer programs are used to execute the method for receiving signals of any one of claims 1 to 15.

36. A computer readable storage medium, wherein the storage medium stores computer programs and the computer programs are used to execute the method for sending signals of any one of claims 16 to 30.

37. A communication apparatus, comprising:

a processor;

a memory storing processor executable instructions;

wherein the processor is configured to execute the executable instructions to perform the steps of the method for receiving signals of any one of claims 1 to 15.

**38.** A signal transmission apparatus, comprising:

a processor;
a memory storing processor executable instructions;
wherein the processor is configured to execute the executable instructions to perform the steps of the method for sending signals of any one of claims 16 to 30.

FIG. 1A

Resource unit (k,l)

Not for transmission on the antenna port

Reference signal on the antenna port

FIG. 1B

FIG. 1C

4 port CRS     PCFICH

$l = 0$              $l = 0$

FIG. 2

Terminal        Base station

Data
(by PUSCH
transmission)

$K_{PHICH}$

HARQ result
(by PHICH
transmission)

FIG. 3

FIG. 4

FIG. 5A

FIG. 5B

FIG. 6

FIG. 7

**EP 4 510 671 A1**

<div style="text-align:center">

| Determine first initial Resource Elements (REs) corresponding to a first Demodulation Reference Signal (DMRS) of a Physical Downlink Control Channel (PDCCH) of a first system | 801 |

↓

| Determine second initial REs corresponding to a reference signal of a second system | 802 |

↓

| Based on the first initial REs, determine candidate REs corresponding to the first DMRS by shift | 803 |

↓

| On available REs of the candidate REs, detect and receive the first DMRS | 804 |

FIG. 8

</div>

41

Determine first initial Resource Elements (REs) corresponding to a first Demodulation Reference Signal (DMRS) of a Physical Downlink Control Channel (PDCCH) of a first system — 901

Determine second initial REs corresponding to a reference signal of a second system — 902

Based on the first initial REs, determine a first shift range by shift — 903

Determine REs within the first shift range as the candidate REs — 904

On available REs of the candidate REs, detect and receive the first DMRS — 905

FIG. 9

```
┌─────────────────────────────────────────────┐
│   Determine first initial Resource Elements (REs)   │
│   corresponding to a first Demodulation Reference   │        1001
│   Signal (DMRS) of a Physical Downlink Control      │
│   Channel (PDCCH) of a first system                 │
└─────────────────────────────────────────────┘
                        │
                        ▼
┌─────────────────────────────────────────────┐
│   Determine second initial REs corresponding to a   │        1002
│   reference signal of a second system               │
└─────────────────────────────────────────────┘
                        │
                        ▼
┌─────────────────────────────────────────────┐
│   Based on the first initial REs, perform sequential │        1003
│   shift in the first direction in frequency domain   │
└─────────────────────────────────────────────┘
                        │
                        ▼
┌─────────────────────────────────────────────┐
│   When a first shift stop condition is satisfied,   │
│   determine as the first shift range a frequency domain │     1004
│   range obtained by performing shift in the first   │
│   direction                                         │
└─────────────────────────────────────────────┘
                        │
                        ▼
┌─────────────────────────────────────────────┐
│   Determine REs within the first shift range as the │        1005
│   candidate REs                                     │
└─────────────────────────────────────────────┘
                        │
                        ▼
┌─────────────────────────────────────────────┐
│   On available REs of the candidate REs, detect and │        1006
│   receive the first DMRS                            │
└─────────────────────────────────────────────┘
```

FIG. 10

Determine first initial Resource Elements (REs) corresponding to a first Demodulation Reference Signal (DMRS) of a Physical Downlink Control Channel (PDCCH) of a first system — 1101

Determine second initial REs corresponding to a reference signal of a second system — 1102

Based on the first initial REs, perform sequential shift in the first direction in frequency domain — 1103

When the first shift stop condition is satisfied, based on the first initial REs, perform sequential shift in a second direction in frequency domain — 1104

When the first shift stop condition is again satisfied, determine as the first shift range the frequency domain ranges obtained by performing shift in the first direction and the second direction — 1105

Determine REs within the first shift range as the candidate REs — 1106

On available REs of the candidate REs, detect and receive the first DMRS — 1107

FIG. 11

Determine first initial Resource Elements (REs) corresponding to a first Demodulation Reference Signal (DMRS) of a Physical Downlink Control Channel (PDCCH) of a first system — 1201

Determine second initial REs corresponding to a reference signal of a second system — 1202

Based on the first initial REs, perform sequential shift in the first direction in frequency domain — 1203

When the first shift stop condition is satisfied, based on the first initial REs, perform sequential shift in a second direction in frequency domain — 1204

When the first shift stop condition is satisfied again, based on the first initial REs, move one time unit in a third direction in time domain — 1205

Based on the shift sequence of the first direction, the second direction and the third direction, continue shift — 1206

When a second shift stop condition is satisfied at the time of performing shift in the third direction, determine as the first shift range the frequency domain ranges obtained by performing shift in the first direction and the second direction and a time domain range obtained by performing shift in the third direction — 1207

Determine REs within the first shift range as the candidate REs — 1208

On available REs of the candidate REs, detect and receive the first DMRS — 1209

FIG. 12A

Determine first initial Resource Elements (REs) corresponding to a first Demodulation Reference Signal (DMRS) of a Physical Downlink Control Channel (PDCCH) of a first system — 1201'

Determine second initial REs corresponding to a reference signal of a second system — 1202'

Based on the first initial REs, perform sequential shift in the first direction in frequency domain — 1203'

When the first shift stop condition is satisfied again, based on the first initial REs, move one time unit in a third direction in time domain — 1204'

Based on the shift sequence of the first direction and the third direction, continue shift — 1205'

When a second shift stop condition is satisfied at the time of performing shift in the third direction, determine as the first shift range the frequency domain range obtained by performing shift in the first direction and a time domain range obtained by performing shift in the third direction — 1206'

Determine REs within the first shift range as the candidate REs — 1207'

On available REs of the candidate REs, detect and receive the first DMRS — 1208'

FIG. 12B

Determine first initial Resource Elements (REs) corresponding to a first Demodulation Reference Signal (DMRS) of a Physical Downlink Control Channel (PDCCH) of a first system — 1301

Determine second initial REs corresponding to a reference signal of a second system — 1302

Determine available REs — 1303

On the available REs, detect and receive the first DMRS — 1304

FIG. 13

Determine first initial Resource Elements (REs) corresponding to a first Demodulation Reference Signal (DMRS) of a Physical Downlink Control Channel (PDCCH) of a first system ⟶ 1401

Determine second initial REs corresponding to a reference signal of a second system ⟶ 1402

Within the first frequency domain range, determine a first proportion of the second initial REs ⟶ 1403

Based on the first proportion, determine an available-RE index set ⟶ 1404

Within the first frequency domain range, remove the second initial REs to obtain a candidate-RE set ⟶ 1405

Based on the available-RE index set, determine the available REs in the candidate-RE set ⟶ 1406

On the available REs, detect and receive the first DMRS ⟶ 1407

FIG. 14

Determine first initial Resource Elements (REs) corresponding to a first Demodulation Reference Signal (DMRS) of a Physical Downlink Control Channel (PDCCH) of a first system — 1501

Determine second initial REs corresponding to a reference signal of a second system — 1502

Based on the first initial REs, determine candidate REs corresponding to the first DMRS by shift — 1503

On available REs of the candidate REs, send the first DMRS — 1504

FIG. 15

Determine first initial Resource Elements (REs) corresponding to a first Demodulation Reference Signal (DMRS) of a Physical Downlink Control Channel (PDCCH) of a first system — 1601

Determine second initial REs corresponding to a reference signal of a second system — 1602

Determine available REs — 1603

On the available REs, send the first DMRS — 1604

FIG. 16

FIG. 17A

FIG. 17B

FIG. 18

FIG. 19

Apparatus for receiving signals

Processing module — 2001

Receiving module — 2002

FIG. 20

Apparatus for receiving signals

Processing module — 2101

Receiving module — 2102

FIG. 21

Apparatus for sending signals

Processing module — 2201

Sending module — 2202

FIG. 22

Apparatus for sending signals

Processing module —2301

Sending module —2302

FIG. 23

2400

—2402

—2404

Memory

Processing
component

Communication
component

—2418

—2406

Power supply
component

—2420

Processor

—2408

Multimedia
component

—2416

Sensor
component

—2410

Audio
component

Input/output
interface —2412

FIG. 24

2500

Processing
component

2522

Wireless
transmissio
n/reception
component

2524

Antenna
component

2526

FIG. 25

## INTERNATIONAL SEARCH REPORT

| International application No. |
| --- |
| **PCT/CN2022/086922** |

**A.    CLASSIFICATION OF SUBJECT MATTER**

H04W 16/18(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNKI; CNTXT; VEN; USTXT; WOTXT; EPTXT; 3GPP; IEEE; IETF: 下行控制信道, 解调参考信号, 重叠, 资源单元, 干扰, 共享, 频率, 频段, 移位, PDCCH, DMRS, overlap, RE, interference, share, frequency, move, shift

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113411148 A (CHINA MOBILE GROUP FUJIAN CO., LTD. et al.) 17 September 2021 (2021-09-17) description, paragraph [0033] | 1-38 |
| A | CN 111988071 A (ZTE CORP.) 24 November 2020 (2020-11-24) entire document | 1-38 |
| A | CN 113615115 A (TELEFONAKTIEBOLAGET LM ERICSSON (PUBL)) 05 November 2021 (2021-11-05) entire document | 1-38 |
| A | CN 114189308 A (ZTE CORP.) 15 March 2022 (2022-03-15) entire document | 1-38 |
| A | CN 113873565 A (CHINA MOBILE GROUP DESIGN INSTITUTE CO., LTD. et al.) 31 December 2021 (2021-12-31) entire document | 1-38 |

☐ Further documents are listed in the continuation of Box C.        ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **05 December 2022** | **13 December 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/086922**

| Patent document cited in search report | | | Publication date (day/month/year) | Patent family member(s) | Publication date (day/month/year) |
|---|---|---|---|---|---|
| CN | 113411148 | A | 17 September 2021 | None | |
| CN | 111988071 | A | 24 November 2020 | None | |
| CN | 113615115 | A | 05 November 2021 | None | |
| CN | 114189308 | A | 15 March 2022 | None | |
| CN | 113873565 | A | 31 December 2021 | None | |

Form PCT/ISA/210 (patent family annex) (January 2015)